# FASCICULE DE BREVET EUROPEEN

(11) **EP 1 346 910 B1**
(45) Date de publication et mention de la délivrance du brevet: **22.12.2004**
(21) Numéro de dépôt: 03290414.6
(22) Date de dépôt: 20.02.2003
(51) Int. Cl.: B64C 27/35, B64C 27/41

(54) **Rotor de giravion a entraînement homocinétique**
Homokinetisch angetriebener Rotor für ein Drehflügelflugzeug
Rotor for a rotary wing aircraft having constant velocity drive

(30) Priorité: 20.03.2002 FR 0203464
(43) Date de publication de la demande: 24.09.2003
(73) Titulaire: EUROCOPTER, 13725 Marignane Cédex (FR)
(72) Inventeur: Zoppitelli, Elio, 13880 Velaux (FR); Rampal, Etienne, 13004 Marseille (FR)
(74) Mandataire: Renaud-Goud, Thierry

(56) Documents cités:
- US-A- 2 827 777
- US-A- 3 804 552
- US-A- 5 145 321
- US-A- 5 165 853

## Description

L'invention concerne un rotor de giravion à entraînement homocinétique, en particulier pour un aéronef convertible supportant deux ailes généralement fixes et à au moins un rotor basculant.

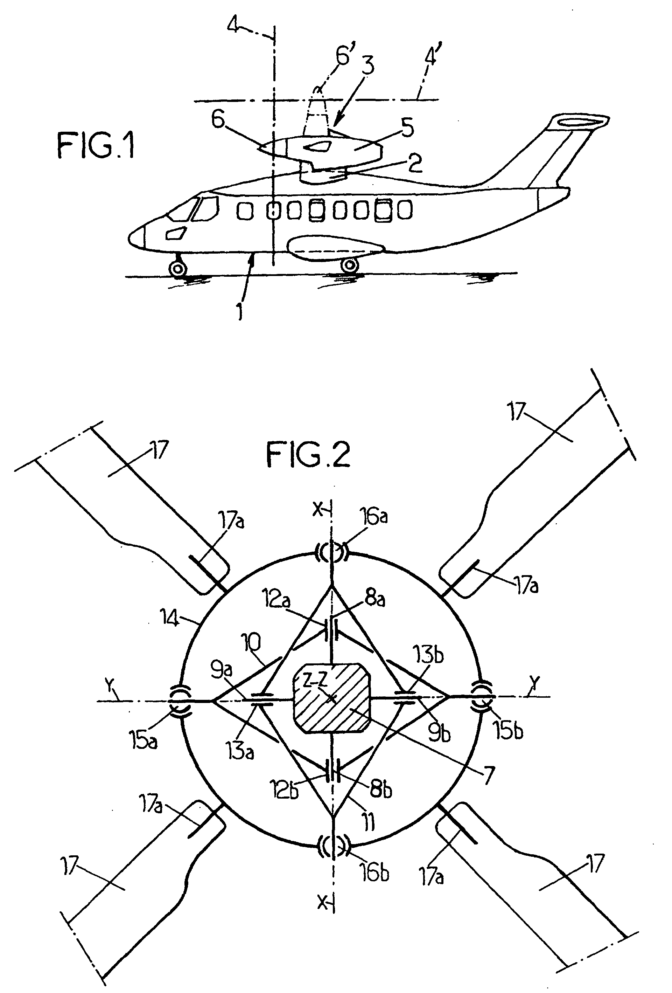

Bien que le rotor à entraînement homocinétique de l'invention soit utilisable comme rotor d'hélicoptère, et en particulier comme rotor arrière ou anti-couple, une application particulièrement avantageuse d'un tel rotor à entraînement homocinétique consiste en l'équipement d'aéronefs convertibles à rotors basculants, notamment du type connu et décrit dans FR 2 791 319, FR 2 791 634 et FR 2 798 359, auxquels on se reportera avantageusement pour davantage de précisions à ce sujet. On se contente de rappeler qu'un tel aéronef convertible à rotors basculants comprend, comme représenté schématiquement sur la figure 1, un fuselage 1, du type fuselage d'avion, supportant deux ailes fixes 2, par exemple des ailes hautes et surélevées par rapport au fuselage 1, chaque aile 2 supportant elle-même une nacelle motrice 3, logeant un groupe moteur entraînant en rotation un rotor 4, schématisé par le plan de rotation des pales du rotor, par l'intermédiaire d'une transmission (non visible sur la figure 1), dont un ensemble réducteur arrière est directement entraîné par le groupe moteur et logé comme ce dernier dans la partie arrière fixe 5 de la nacelle motrice 3, dont la partie avant 6, logeant le mât rotor et le moyeu, ainsi qu'un ensemble réducteur avant entraînant le mât rotor en rotation, est monté basculante avec le rotor 4, de sorte à pouvoir basculer d'une configuration avion, dans laquelle le rotor 4 se comporte comme une hélice à l'avant d'un fuseau moteur 5-6 dans le lit du vent relatif, à une configuration hélicoptère, dans laquelle le rotor 4' se comporte comme un rotor principal sustentateur d'hélicoptère à l'extrémité supérieure de la partie avant basculante de nacelle en position érigée 6' au-dessus de l'aile correspondante 2, cette dernière configuration étant utilisée pour les décollages et atterrissages de l'aéronef convertible, qui, après transition de la configuration hélicoptère vers la configuration avion, peut se déplacer en vol d'avancement comme un avion. En variante, les nacelles 3 peuvent être totalement basculantes avec les rotors 4 par rapport aux ailes fixes 2.

Sur les rotors de giravion, il est connu que, depuis l'introduction de l'articulation de battement sur les rotors d'autogires et d'hélicoptères, le basculement du rotor en présence de conicité, que ce basculement soit souhaité et généré par le pilotage en pas cyclique ou subi du fait de la dissymétrie entre une pale avançante et une pale reculante, provoque, dans le plan d'entraînement des pales, des sollicitations qui ont tendance à faire accélérer et ralentir les pales au cours d'un tour du rotor. Ces modulations de vitesse sont provoquées par les forces de Coriolis, et peuvent être illustrées simplement par le fait que la trajectoire de l'extrémité des pales, vue dans un plan perpendiculaire à l'axe d'entraînement, est une ellipse excentrée, dont la vitesse angulaire de parcours est constante, et, en conséquence, dont la vitesse périphérique est modulée sur un tour. Ces accélérations et ralentissements des pales sur un tour de rotation ont un effet néfaste sur la durée de vie des composants du rotor, du fait que ces variations de vitesses génèrent des contraintes d'autant plus importantes que la rigidité des composants du rotor est élevée.

Réciproquement, il est connu qu'une grande souplesse selon l'axe de traînée des pales a un effet très bénéfique sur les sollicitations dynamiques que subissent les pales et les composants du moyeu du rotor, et c'est la raison pour laquelle l'introduction de l'articulation de battement s'est accompagnée de l'introduction de l'articulation de traînée.

Ces perfectionnements aux concepts originaux de rotors de giravions ont abouti au rotor entièrement articulé en pas, battement et traînée, dont le principal inconvénient était d'être sujet à des instabilités de type résonance sol ou résonance air, qui ont nécessité le développement et l'utilisation d'amortisseurs de traînée, également dénommés adaptateurs de fréquence, ou encore contre-fiches de rappel élastique en traînée avec amortissement incorporé. Sur les rotors d'hélicoptère, ces amortisseurs de traînée sont disposés dans le plan de rotation du rotor, entre les pales et le moyeu du rotor dans un montage classique, ou entre des pales voisines du rotor, dans le montage dit interpale. Dans les deux cas, la présence des amortisseurs de traînée augmente la traînée aérodynamique du rotor, en particulier au niveau du moyeu et de la liaison du moyeu aux pales, ce qui réduit la performance globale de l'hélicoptère.

Sur un aéronef convertible, du type à rotors basculants présenté ci-dessus, dont la vitesse de déplacement, en mode avion, est bien plus élevée que celle d'un hélicoptère, et sur lequel les amortisseurs de traînée, montés comme sur un rotor d'hélicoptère, seraient dans le lit du vent, cette réduction de performance serait bien plus sensible, raison pour laquelle les concepteurs d'aéronefs convertibles de ce type se sont attachés à retenir, pour la définition des rotors, des moyeux extrêmement rigides en traînée (rotors dits « stiff-in-plane »), dépourvus d'amortisseurs de traînée, et dont la fréquence propre de traînée est supérieure à la fréquence de rotation nominale du rotor, ce qui supprime tout risque d'instabilité en traînée, même en l'absence d'amortisseurs de traînée.

Mais il est connu que les rotors rigides en traînée ont l'inconvénient majeur de générer des sollicitations très élevées lors des basculements des rotors. Sur les aéronefs convertibles, le souci de parvenir à des rotors de grande finesse aérodynamique, et donc sans amortisseurs de traînée, a conduit au développement de moyeux qui ne sont pas sensibles aux forces de Coriolis. Ces moyeux, parmi lesquels se trouvent les moyeux à entraînement par cardan, ont la particularité d'accompagner le basculement du rotor par le basculement de l'axe d'entraînement de ce dernier. De ce fait, l'axe d'entraînement du rotor est toujours perpendiculaire au plan du rotor, et la trajectoire décrite par les pales reste toujours un cercle dans un plan perpendiculaire à l'axe d'entraînement du rotor. Ce type d'entraînement a, par exemple, été utilisé sur des prototypes d'aéronefs convertibles, notamment celui dénommé XV15.

Mais une particularité connue des joints de cardan est de ne pas être homocinétiques, ce qui se manifeste par le fait que la vitesse de sortie de ces joints n'est pas toujours égale à la vitesse d'entrée. Cette distorsion de vitesse se produit lorsque les axes d'entraînement et de sortie ne sont pas colinéaires, c'est-à-dire, dans l'application considérée à l'entraînement en rotation d'un rotor, en présence de battements cycliques. Dans la configuration la plus simple d'un joint de cardan, ce dernier comporte un croisillon dont les articulations, par une branche du croisillon sur un arbre menant et par l'autre branche du croisillon sur un arbre mené, permettent un rotulage de l'arbre mené ou de sortie relativement à l'arbre menant ou d'entrée. On sait que les modulations de vitesse apportées par un tel joint de cardan, et transmises à l'arbre mené, correspondent à des accélérations et décélérations qui, sur un tour de rotation du cardan, se manifestent deux fois. La vitesse de l'arbre mené n'est donc pas constante, mais modulée à une fréquence égale au double de la fréquence de rotation des arbres.

Pour supprimer ces modulations de vitesse, responsables de forces d'inertie très importantes, dans le cas d'un rotor de giravion, qui affectent globalement le moyeu et sont préjudiciables à la bonne tenue des ensembles mécaniques constitutifs du moyeu ou associés à ce dernier, plusieurs systèmes d'entraînement homocinétiques ont été proposés, notamment les compas dits de Clemens, composés d'ensembles de deux branches articulées chacune respectivement aux arbres menant et mené et reliées par une rotule, ainsi que les joints tripodes, pour lesquels la transmission du mouvement est assurée au moyen de billes se déplaçant dans des gorges axiales usinées dans les arbres menant et mené.

Par ces modes de réalisation, on assure que le point d'entraînement se situe toujours dans le plan bissecteur des axes menant et mené. Comme les distances de ce point aux deux axes sont alors identiques, les vitesses de rotation des deux arbres sont rigoureusement égales, quelle que soit la position angulaire des deux arbres, ce qui garantit le caractère homocinétique de la transmission.

Ces deux systèmes d'entraînement homocinétique connus ne sont pas adaptés à une application sur des rotors d'aéronefs convertibles pour les raisons suivantes :
- l'installation de compas de Clemens sur un moyeu de rotor d'aéronef convertible augmente de manière très importante la traînée du moyeu, ce qui réduit ses performances et augmente son coût d'opération ;
- les joints tripodes ne conviennent pas notamment à cause des niveaux de couple élevés rencontrés sur les moyeux de rotors d'aéronefs convertibles, et qui nécessitent des billes de diamètre élevé, donc lourdes, pour maintenir les pressions de Hertz des surfaces de contact à des niveaux acceptables.

Dans d'autres modes de réalisation, les fonctions rotulage et entraînement sont découplées. Ceci est le cas dans le système d'entraînement homocinétique de l'aéronef convertible à rotors basculants dénommé « V22 », dans lequel la fonction de rotulage est réalisée par deux demi-butées lamifiées sphériques de battement enveloppant le moyeu et reliées au mât rotor. Cette fonction permet la reprise de la portance et de l'effort coplanaire provenant des excitations aérodynamiques et inertielles du rotor. L'entraînement du moyeu par le mât (transmission du couple) est assuré par trois biellettes reliées chacune, par une extrémité, au moyeu, et, par l'autre extrémité, au mât.

Une variante de ce système est proposée dans le brevet US-5,145,321, dans lequel la fonction d'entraînement est assurée par des paliers rotulés sensiblement parallélépipédiques.

Ces moyens distincts assurant les fonctions de rotulage et d'entraînement du moyeu par rapport au mât rotor ont pour particularité d'être cinématiquement non compatibles en l'absence de souplesse des éléments de liaison du moyeu au mât, et de n'être homocinétiques que grâce à un calibrage précis des rigidités de ces éléments de liaison. En présence d'un battement cyclique du rotor, chaque biellette d'entraînement précitée subit une sollicitation dynamique à une fréquence égale à deux fois la fréquence de rotation du rotor, et dont la phase dépend de la position de cette biellette par rapport au moyeu. Pour des biellettes régulièrement espacées, en direction circonférentielle autour de l'axe de rotation, le déphasage des sollicitations dynamiques des biellettes est tel que les contributions au couple dynamique s'annulent, ce qui est une condition nécessaire et suffisante pour un entraînement homocinétique du moyeu par le mât rotor. Un autre inconvénient majeur de ce type de moyeu, qui s'ajoute à celui portant sur la nécessité du calibrage précis des rigidités des biellettes d'entraînement, est que la disposition enveloppante des demi-butées de battement rend l'inspection des biellettes notamment, et du système de transmission de couple en général, délicate, ainsi que l'accessibilité à ces moyens pour leur maintenance.

Dans le brevet US-5,145,321 précité, le cisaillement vertical d'un palier rotulé sensiblement parallélépipédique permet le basculement du rotor autour d'un axe perpendiculaire à l'axe joignant le centre du palier rotulé à l'axe d'entraînement du rotor. Le mouvement du rotor autour d'un deuxième axe de basculement est permis grâce à l'articulation à rotule présente à l'intérieur du palier parallélépipédique. De même que pour un système à entraînement du moyeu par le mât par l'intermédiaire de biellettes, comme présenté ci-dessus, un nombre minimum de trois paliers aux rigidités très voisines est nécessaire pour que l'entraînement soit homocinétique. La souplesse nécessaire au bon fonctionnement est également dirigée selon la direction d'entraînement en rotation.

Le document US-A-5 165 853 montre un autre rotor de giravion à entraînement homocinétique selon le préambule de la revendication 1.

Le problème à la base de l'invention est de proposer un rotor de giravion à entraînement homocinétique, en particulier pour un aéronef convertible à au moins un rotor basculant, dont le mécanisme d'entraînement homocinétique possède les degrés de liberté suivants :
- deux degrés de liberté en rotation autour de deux axes coplanaires, pour le basculement du moyeu, et donc du rotor,
- aucun degré de liberté en translation,
ce qui équivaut, en terme d'efforts :
- au passage des efforts, c'est-à-dire la portance et les efforts coplanaires, suivant les deux axes considérés ci-dessus et suivant l'axe autour duquel s'effectue l'entraînement en rotation, et
- au passage des moments autour de l'axe de rotation du mât rotor seulement, ce qui correspond au couple d'entraînement du moyeu, la capacité de rotulage de ce mécanisme n'étant donc que partielle, puisqu'il n'offre pas de liberté de rotation de ce mécanisme autour du mât, le rotor de l'invention remédiant aux inconvénients des rotors de ce type de l'état de la technique, et tels que présentés ci-dessus, en étant plus léger, plus simple, plus accessible, et donc d'une réalisation et d'une maintenance plus économique, et, d'une manière plus générale, dans lequel les fonctions de rotulage et d'entraînement du moyeu respectivement par rapport et par le mât rotor n'ont pas à être nécessairement découplées.

A cet effet, l'invention propose un rotor de giravion à entraînement homocinétique, du type connu et comprenant :
- un mât rotor, apte à être entraîné en rotation autour de son axe longitudinal,
- un moyeu, relié audit mât par un mécanisme d'entraînement homocinétique et par des moyens de basculement, permettant un pivotement d'ensemble du moyeu autour de tout axe de battement concourant avec l'axe du mât et perpendiculaire audit axe du mât, de sorte que ledit moyeu est apte à être entraîné en rotation homocinétique par ledit mât, autour d'un axe géométrique de rotation du moyeu pouvant être incliné dans toute direction autour de l'axe du mât, et
- au moins deux pales, reliées chacune audit moyeu par des moyens de retenue et d'articulation en pas de la pale correspondante,
et qui se caractérise en ce que lesdits moyens de basculement et mécanisme d'entraînement homocinétique comprennent :
- un premier balancier, entraîné en rotation par ledit mât autour dudit axe du mât, et monté pivotant autour d'un premier axe diamétral du mât, qui est sensiblement perpendiculaire audit axe du mât, par deux premiers paliers diamétralement opposés par rapport audit axe du mât,
- un second balancier, également entraîné en rotation par ledit mât autour dudit axe du mât, et monté pivotant autour d'un second axe diamétral dudit mât, qui est sensiblement perpendiculaire audit axe du mât et audit premier axe diamétral et concourant avec ce dernier sensiblement sur ledit axe du mât, par deux seconds paliers diamétralement opposés par rapport audit axe du mât,
- ledit premier balancier étant de plus articulé sur ledit moyeu par deux premières liaisons rotulées, diamétralement opposées par rapport audit axe du mât, et centrées chacune sensiblement dans un plan défini par ledit axe du mât et ledit second axe diamétral,
- ledit second balancier étant de plus articulé sur ledit moyeu par deux secondes liaison rotulées, diamétralement opposées par rapport audit axe du mât et centrées chacune sensiblement dans un plan défini par ledit axe du mât et ledit premier axe diamétral, de sorte que l'entraînement en rotation des pales est assuré par deux chaînes de transmission de couple comprenant chacune ledit mât, l'un respectivement des balanciers, les deux liaisons rotulées et les deux paliers correspondants, et ledit moyeu, lesdites chaînes de transmission de couple ayant sensiblement la même rigidité torsionnelle, et l'un au moins des composants de chaque chaîne de transmission de couple présentant une souplesse en déformation autour de l'axe de rotation du moyeu.

Le rotor selon l'invention comporte ainsi des moyens d'entraînement et d'articulation du moyeu par et par rapport au mât qui sont basés sur un joint de cardan dont les deux articulations successives seraient combinées au même niveau entre la pièce menante, le mât rotor, et la pièce menée, le moyeu, de sorte que ce dispositif a l'avantage de réaliser à la fois les deux fonctions de rotulage et de transmission du couple à l'aide d'un nombre réduit de pièces, ce qui le rend intéressant sur les plans de la masse, du coût, et de la maintenance.

De plus, afin que ces moyens soient cinématiquement compatibles, il est nécessaire que les deux balanciers puissent effectuer de petits débattements angulaires relatifs autour de l'axe géométrique de rotation du moyeu. En effet, en cas de basculement du moyeu par rapport au mât et autour d'un axe non confondu avec les axes de pivotement des balanciers, le basculement des balanciers provoque, en l'absence de souplesse entre les deux chaînes de transmission du couple, des rotations des balanciers de sens opposé autour de l'axe d'entraînement du rotor. Le basculement de l'un des balanciers a tendance à faire avancer le moyeu, dans le sens de rotation du rotor, alors que le basculement de l'autre balancier a tendance à faire reculer le moyeu (rotation dans le sens contraire au sens de rotation du rotor). Pour sortir de cet état hyperstatique, un degré de liberté supplémentaire est introduit selon l'axe d'entraînement, et ceci est obtenu en faisant en sorte que l'un au moins des composants de chaque chaîne de transmission de couple présente une souplesse en déformation autour de l'axe de rotation du moyeu.

D'une manière générale, la souplesse nécessaire autour de l'axe de transmission du couple peut être procurée au niveau du moyeu, lorsque ce dernier comprend au -moins deux parties de moyeu rendues souples en torsion relative autour de l'axe de rotation du moyeu par des caractéristiques de forme et/ou de matériaux constitutifs desdites parties de moyeu, sur chacune desquelles l'un respectivement des balanciers est articulé par les deux liaisons rotulées correspondantes.

Alternativement, ou de plus, chacun des deux balanciers peut être réalisé avec une forme et/ou en des matériaux procurant une souplesse en déformation autour de l'axe de rotation du moyeu.

Simultanément, ou alternativement, cette souplesse en déformation peut être présentée par le mât, qui comporte alors deux parties assouplies en torsion relative autour de l'axe du mât, et définies par au moins une fente et/ou au moins une rainure et/ou une échancrure, sensiblement axiale, débouchante ou non, ménagée dans le mât, et telles que chacun des balanciers est pivoté sur et entraîné en rotation par l'une respectivement desdites parties assouplies en torsion du mât.

Dans tous les cas, comme indiqué ci-dessus, les deux chaînes de transmission du couple doivent avoir sensiblement la même rigidité torsionnelle, afin qu'il y ait équilibre des efforts dynamiques en 2 Ω, où Ω est la fréquence de rotation du rotor, pour que le mécanisme d'entraînement selon invention soit bien homocinétique. Mais cette rigidité torsionnelle des chaînes de transmission du couple doit également être compatible avec les sollicitations statiques (liées au couple) et dynamiques (liées aux déplacements imposés par la cinématique du dispositif) selon l'axe de transmission de couple.

Selon un premier exemple avantageux de réalisation, le mât comprend au moins deux tubes de torsion, ayant des rigidités en torsion sensiblement égales, et qui sont solidaires l'un de l'autre en rotation autour dudit axe du mât par une extrémité axiale apte à être entraînée en rotation, chacun des deux balanciers étant monté pivotant sur l'un respectivement des deux tubes de torsion autour de l'un respectivement des deux axes diamétraux. Ainsi, la souplesse requise pour permettre une rotation relative des deux balanciers autour de l'axe d'entraînement du moyeu est apportée par les deux tubes travaillant en torsion et sollicités dans des sens opposés. Les rigidités en torsion sensiblement égales des deux tubes permettent d'équilibrer les efforts dynamiques en 2 Ω, de sorte que l'entraînement est effectivement homocinétique.

Dans un mode préféré de réalisation, les deux tubes de torsion sont coaxiaux, disposés l'un dans l'autre, et solidaires en rotation autour de l'axe du mât par leurs extrémités axialement d'un même côté dudit axe du mât, le tube interne étant solidaire, du côté de son extrémité axiale opposée, d'un manchon coaxial sur lequel le balancier correspondant est monté pivotant autour de l'axe diamétral correspondant. Du fait de leur disposition coaxiale et l'un dans l'autre, les deux tubes de torsion sont réalisés en des matériaux différents ayant des modules d'élasticité différents, car l'inertie en torsion du tube enveloppant est très probablement supérieure à l'inertie du tube enveloppé, de sorte que le tube enveloppant ou tube externe doit être réalisé en un matériau de module d'élasticité plus faible que celui du matériau du tube enveloppé ou tube interne, pour atteindre la souplesse en torsion de ce tube interne.

Selon un second exemple avantageux de réalisation, le degré de liberté supplémentaire selon l'axe d'entraînement, et qui correspond à la souplesse requise entre les deux chaînes de transmission du couple, est introduit par la réalisation des paliers et/ou des liaisons rotulées d'articulation des balanciers respectivement par rapport au mât et sur le moyeu, et, à cet effet, différents modes de réalisation de paliers souples et/ou de liaisons rotulées souples sont possibles.

Les paliers peuvent être réalisés à partir d'éléments lamifiés cylindriques, coniques ou sphériques, ou une combinaison de ces différentes formes, de manière à permettre l'articulation de chaque balancier par rapport au mât avec une certaine souplesse selon l'axe de transmission du couple.

En particulier, les paliers de pivotement des balanciers par rapport au mât sont des paliers lamifiés cylindriques et/ou coniques sensiblement coaxiaux autour respectivement des premier et second axes diamétraux, et de préférence sensiblement de même rigidité radiale. En outre, ces paliers de pivotement peuvent comprendre des éléments lamifiés sphériques, auquel cas ces derniers sont centrés sensiblement sur l'un respectivement des axes diamétraux précités, et de préférence sensiblement de même rigidité radiale par rapport auxdits axes diamétraux.

Les liaisons rotulées peuvent également être réalisées à partir d'éléments lamifiés sphériques, cylindriques, coniques ou parallélépipédiques, ou une combinaison de ces formes, de manière à permettre l'articulation de chaque balancier par rapport au moyeu avec également une certaine souplesse selon l'axe de transmission du couple.

En particulier, les liaisons rotulées des articulations des balanciers sur le moyeu comprennent des rotules associées à des paliers lamifiés cylindriques et/ou coniques sensiblement coaxiaux, procurant une souplesse radiale et axiale par rapport à l'axe diamétral correspondant, entre deux armatures rigides respectivement en position radiale interne et externe, dont une première est fixée au balancier correspondant, et dont la seconde est fixée au moyeu.

Avantageusement, ces liaisons rotulées des articulations des balanciers sur le moyeu comprennent des rotules lamifiées.

Ainsi, les paliers de pivotement des balanciers et les liaisons rotulées des balanciers au moyeu présentent une souplesse suffisante pour permettre les basculements des balanciers sans contrainte excessive. De plus, l'utilisation de paliers lamifiés de pivotement sensiblement de même rigidité radiale permet d'assurer un équilibre des efforts dynamiques en 2Ω, ce qui, comme expliqué ci-dessus, correspond à un entraînement homocinétique.

De manière pratique, les premier et second balanciers sont entraînés en rotation autour dudit axe du mât par respectivement un premier et un second bras d'entraînement, solidaires en rotation dudit mât, et dont les axes sont respectivement les premier et second axes diamétraux dudit mât.

On réalise ainsi sur le mât deux bras d'entraînement décalés de 90° et tous deux perpendiculaires à l'axe du mât, et sur lesquels sont montés pivotants les balanciers par ailleurs articulés sur le moyeu par les liaisons rotulées.

Selon une structure avantageusement simple, chacun des bras d'entraînement comprend deux embouts de révolution autour de l'axe diamétral correspondant, diamétralement opposés et en saillie radiale vers l'extérieur dudit mât, et chacun retenu dans l'un respectivement des deux paliers de pivotement du balancier correspondant par rapport audit mât.

Dans la variante de réalisation, dans laquelle la souplesse entre les deux chaînes de transmission du couple est apportée par les deux tubes de torsion précités, les deux embouts de chaque bras d'entraînement sont avantageusement en saillie radiale vers l'extérieur et solidaire de l'un respectivement des deux tubes de torsion.

Par contre, lorsque cette souplesse entre les deux chaînes de transmission du couple est apportée au niveau des paliers et/ou liaisons rotulées, les deux embouts de chaque bras d'entraînement sont en saillie radiale vers l'extérieur et solidaires d'une bobine centrale d'entraînement montée autour du mât et solidaire en rotation de ce dernier autour de son axe.

Afin que le moyeu puisse avantageusement être rigide dans son plan, et que l'ensemble du mécanisme d'entraînement homocinétique et des moyens de basculement soit convenablement protégé, la seconde armature de chaque articulation combinée à rotule et palier lamifié est avantageusement fixée sur un carter de moyeu, qui entoure les deux balanciers, leurs paliers de pivotement et articulations, et est fixé à un plateau de moyeu relié aux pales et présentant une ouverture centrale de passage dudit mât. Le plateau de moyeu peut alors être un plateau de type connu, en matériau composite, et en forme d'étoile à bras élancés en nombre égal au nombre des pales et sur chacun desquels sont montés les moyens de retenue et d'articulation en pas d'une pale, cette disposition permettant d'obtenir une bonne rigidité en traînée et une certaine souplesse selon l'axe de battement.

Dans un mode de réalisation préféré, chaque palier lamifié de pivotement d'un balancier est un palier conique convergent radialement vers l'extérieur, dont une armature radiale externe est annulaire et fixée dans une échancrure de forme correspondante du balancier correspondant, et dont une armature radiale interne est tubulaire et solidaire d'un embout d'entraînement par ledit mât.

Afin d'améliorer la rigidité du rotor en battement cyclique, le moyeu peut être également et avantageusement relié au mât par au moins un moyen de rappel élastique du moyeu dans une position de repos sensiblement perpendiculaire à l'axe du mât.

D'une manière connue en soi, ce moyen de rappel élastique peut comprendre, avantageusement, au moins une demi-butée sphérique lamifiée centrale, dont une armature externe est liée au moyeu et une armature interne est solidaire en rotation du mât. Cette demi-butée sphérique peut être montée sous le plateau de moyeu, lui-même fixé sous le carter de moyeu enveloppant le mécanisme d'entraînement homocinétique et les moyens de basculement, mais, si de plus le moyen de rappel élastique comprend également une demi-butée sphérique lamifiée centrale supérieure, qui recouvre et enveloppe ledit carter de moyeu, on obtient alors une butée sphérique lamifiée centrale qui contribue à passer dans le mât rotor la portance et les efforts coplanaires s'exerçant sur le rotor.

D'autres caractéristiques et avantages de l'invention ressortiront de la description donnée ci-dessous, à titre non limitatif, d'exemples de réalisation décrits en référence aux dessins annexés sur lesquels :
- la figure 1 représente schématiquement, en élévation latérale, un aéronef convertible à rotors basculants destinés à être équipés de rotors à entraînement homocinétique selon l'invention,
- la figure 2 est une vue schématique en plan d'un rotor quadripale à entraînement homocinétique selon l'invention,
- la figure 3 est une vue schématique en partie en plan et en partie en coupe d'un rotor tripale à entraînement homocinétique selon l'invention,
- la figure 4 est une vue en coupe selon IV-IV de la figure 3,
- la figure 5 est une vue en coupe selon V-V de la figure 4,
- la figure 6 est une vue analogue à la figure 3 pour un second exemple de rotor tripale à entraînement homocinétique à deux tubes de torsion,
- la figure 7 est une vue en coupe axiale selon VII-VII de la figure 6,
- les figures 8, 9, 10 et 11 sont des vues schématiques en coupe axiale selon des plans perpendiculaires et une vue schématique en plan et en partie en coupe de l'un des tubes de torsion avec, sur la figure 10, un manchon de support d'embouts de bras d'entraînement solidarisé à l'autre tube de torsion sur la figure 7, et
- la figure 12 est une vue partielle, en partie en coupe axiale et en partie en élévation latérale, de l'exemple de rotor des figures 4 à 6 équipé de plus d'une demi-butée lamifiée sphérique centrale pour la suspension du moyeu.

La figure 2 représente schématiquement en plan un rotor quadripale à entraînement homocinétique selon l'invention, pour l'équipement des rotors basculants de l'aéronef convertible décrit ci-dessus en référence à la figure 1.

Sur la figure 2, ce rotor quadripale comprend un mât rotor 7, entraîné par sa base en rotation autour de son axe longitudinal Z-Z, et dont la partie d'extrémité, du côté opposé à la base (non représentée), supporte, en porte-à-faux, deux embouts d'entraînement 8a et 8b, diamétralement opposés par rapport à l'axe Z-Z et en saillie radiale vers l'extérieur du mât 7, perpendiculairement à l'axe Z-Z, et coaxiaux autour d'un premier axe diamétral X-X du mât 7, de sorte que les embouts 8a et 8b constituent un premier bras d'entraînement diamétral, solidaire en rotation du mât 7. De même, le mât 7 supporte deux autres embouts d'entraînement 9a et 9b, également diamétralement opposés par rapport à l'axe Z-Z et perpendiculaires à ce dernier, en porte-à-faux et en saillie radialement vers l'extérieur du mât 7, et coaxiaux autour d'un second axe diamétral Y-Y de l'arbre 7 qui est perpendicualire au premier axe diamétral X-X et concourant avec ce dernier sur l'axe Z-Z. Les deux embouts 9a, 9b réalisent ainsi un deuxième bras d'entraînement diamétral, solidaire en rotation du mât 7 et perpendiculaire au premier bras d'entraînement diamétral 8a-8b.

Un premier balancier 10, sensiblement en forme de losange sur la figure 2, est monté pivotant autour du premier axe diamétral X-X par deux premiers paliers 12a, 12b, représentés sous la forme de paliers cylindriques lisses ou de préférence lamifiés, montés tourillonnants sur les embouts d'entraînement respectivement 8a et 8b, tandis qu'un second balancier 11, également de forme sensiblement en losange, et orienté perpendiculairement au premier balancier 10, est monté pivotant, de manière analogue, par deux seconds paliers 13a et 13b, de même nature que les paliers 12a et 12b, sur les embouts d'entraînement respectivement 9a et 9b, de sorte que le second balancier 11 soit basculant par rapport au mât 7 autour du second axe diamétral Y-Y.

Les deux balanciers 10 et 11 sont ainsi entraînés en rotation par le mât 7, autour de l'axe Z-Z du mât 7, tout en étant montés pivotants chacun autour de l'un respectivement de deux axes diamétraux perpendiculaires X-X, Y-Y et sécants, qui sont les axes des deux bras d'entraînement en rotation.

De plus, le premier balancier 10 est articulé sur un carter ou corps de moyeu 14, représenté avec une forme annulaire sur la figure 2, par deux premières liaisons rotulées, comportant de préférence des lamifiées, 15a et 15b, qui sont diamétralement opposées par rapport à l'axe Z-Z du mât 7, et centrées chacune sur le second axe diamétral Y-Y, en position neutre ou de repos du rotor, les deux premières liaisons rotulées 15a, 15b restant centrées sensiblement dans un plan diamétral, défini par l'axe Z-Z et par le second axe diamétral Y-Y, lorsque le premier balancier 10 est basculé autour du premier axe diamétral X-X.

De manière analogue, le second balancier 11 est articulé sur le corps de moyeu 14 par deux secondes liaisons rotulées, comportant également de préférence des rotules lamifiées, 16a, 16b, diamétralement opposées par rapport à l'axe Z-Z et centrées chacune, au repos ou en position neutre du rotor, sur le premier axe diamétral X-X, ces secondes liaisons rotulées 16a, 16b restant sensiblement centrées dans un plan diamétral défini par l'axe Z-Z et le premier axe diamétral X-X lorsque le second balancier 11 est basculé autour du second axe diamétral Y-Y.

Le corps de moyeu 14 supporte, radialement vers l'extérieur par rapport au mât 7, quatre pales 17, dont chacune est reliée au moyeu 14 par des moyens, schématisés en 17a, assurant la retenue de la pale 17 correspondante et l'articulation de cette pale en pas autour de son axe longitudinal.

Dans ce rotor, le moyeu 14 est relié au mât 7 par les deux balanciers croisés 10 et 11, articulés à l'intérieur du moyeu 14 par les liaisons rotulées lamifiées 15a, 15b et 16a, 16b, et articulés à pivotement autour des deux bras d'entraînement perpendiculaires 8a-8b et 9a-9b, par des paliers 12a, 12b et 13a, 13b, selon un agencement constituant simultanément un mécanisme de basculement du moyeu 14 et des pales 17, permettant un pivotement d'ensemble du moyeu 14 autour de tout axe de battement coupant l'axe Z-Z du mât 7 et orienté selon un azimut quelconque autour de l'axe Z-Z, et un mécanisme d'entraînement homocinétique du moyeu 14 et des pales 17 autour d'un axe géométrique de rotation du moyeu 14, qui peut être incliné dans toute direction autour de l'axe Z-Z du mât 7 en commandant les pivotements des balanciers 10 et 11 autour de leurs axes diamétraux respectifs X-X et Y-Y. La transmission du couple entre le mât 7 et le moyeu 14 est assurée par deux chaînes de transmission comportant, chacune, le mât 7, l'un respectivement des balanciers 10 et 11, les deux p aliers 12a, 12b ou 13a, 13b correspondants, les deux liaisons rotulées 15a, 15b ou 16a, 16b correspondantes et le moyeu 14, ces deux chaînes de transmission de couple ayant sensiblement la même rigidité en torsion autour de l'axe de rotation du moyeu 14, afin que la transmission soit homocinétique, du fait de l'équilibre des efforts dynamiques en 2 Ω.

La souplesse nécessaire pour que ce mécanisme ne soit pas hyperstatique est apportée par la souplesse des paliers lamifiés 12a, 12b et 13a, 13b de pivotement des balanciers 10, 11 et/ou des articulations sphériques lamifiées 15a, 15b et 16a, 16b de liaison des balanciers 10 et 11 au moyeu 14, de sorte que les basculements des balanciers 10 et 11 sont permis sans contrainte excessive, et en autorisant un faible débattement angulaire relatif des deux balanciers 10 et 11 autour de l'axe d'entraînement.

Les paliers lamifiés 12a, 12b et 13a, 13b peuvent être réalisés à partir d'éléments lamifiés cylindriques, ou tronconiques, ou même sphériques, ou encore constitués de combinaisons d'éléments lamifiés de ces différents types, de manière à permettre les articulations à pivotement des balanciers 10 et 11 relativement au mât 7 avec une certaine souplesse selon l'axe de transmission du couple.

. Les liaisons rotulées 15a, 15b et 16a, 16b sont des articulations sphériques et lamifiées comportant des rotules lamifiées, ou des rotules normales associées à des éléments lamifiés de type cylindrique ou tronconique, ou encore à une combinaison d'éléments lamifiés de ces différents types, de manière à permettre l'articulation des balanciers 10 et 11 sur le moyeu 14 avec également une certaine souplesse selon l'axe de transmission du couple. A cet effet, les liaisons rotulées sont avantageusement réalisées avec des rotules lamifiées associées à des paliers lamifiés cylindriques et/ou tronconiques.

Lorsque le dispositif à deux balanciers 10 et 11 n'est pas enveloppé par des demi-butées sphériques de battement, les paliers lamifiés 12a, 12b et 13a, 13b et/ou les liaisons rotulées et lamifiées 15a, 15b et 16a, 16b doivent être capables non seulement d'apporter la souplesse requise selon l'axe de transmission du couple, mais également de transmettre les sollicitations provenant du rotor (portance et efforts coplanaires), et, à cet effet, au moins ces paliers lamifiés, assurant la liaison entre les balanciers 10 et 11 et le mât 7, ou au moins ces liaisons rotulées et lamifiées, assurant la liaison entre les balanciers 10 et 11 et le moyeu 14, ou de préférence ces paliers lamifiés et liaisons rotulées et lamifiées doivent pouvoir transmettre un effort axial, relativement à l'axe diamétral X-X ou Y-Y correspondant, qui est simultanément un axe de révolution des éléments lamifiés constitutifs de ces paliers et liaisons rotulées, ce qui peut être assuré, de manière simple, par l'utilisation d'éléments lamifiés tronconiques pour réaliser les paliers lamifiés 12a, 12b et 13a, 13b et/ou les liaisons rotulées 15a, 15b et 16a, 16b.

Par contre, en présence de butée sphérique de battement, enveloppant le dispositif de balanciers 10 et 11, pour des raisons dynamiques notamment, et permettant une augmentation de la rigidité en battement et participant à la transmission des efforts de portance et coplanaires du moyeu 14 au mât 7, de sorte que la reprise de l'effort coplanaire ne doit pas être nécessairement assurée par les éléments lamifiés des paliers 12a, 12b et 13a, 13b et des liaisons rotulées 15a, 15b et 16a, 16b, il n'est pas nécessaire que ces paliers et liaisons rotulées comportent des éléments lamifiés tronconiques, ou tout autre élément lamifié capable de transmettre un effort axial.

En variante, et alternativement ou simultanément, la souplesse nécessaire selon l'axe de transmission du couple et entre les deux chaînes de transmission de couple peut être apportée par le mât 7, et/ou les balanciers 10 et 11, et/ou le moyeu 14.

Par exemple, le moyeu 14 peut comporter au moins deux parties souples en torsion relative autour de l'axe géométrique d'entraînement du moyeu 14, ou axe de transmission du couple, l'une de ces deux parties supportant les deux liaisons rotulées 15a et 15b, tandis que l'autre supporte les deux autres rotulées 16a et 16b, ces deux parties pouvant être délimitées sur le moyeu 14 par des moyens géométriques, tels que des rainures et/ou fentes, débouchant éventuellement dans une extrémité axiale du corps de moyeu tubulaire 14, et/ou par des nervures associées aux rainures ou fentes, ou encore par une forme géométrique particulière donnée à ces parties du moyeu 14, sur lequel ces deux parties souples peuvent éventuellement être réalisées par introduction de matériaux possédant des caractéristiques mécaniques et/ou physiques localement différentes.

Si de la souplesse requise est obtenue au niveau des deux balanciers 10 et 11, cette souplesse doit être obtenue dans la même mesure sur chacun des balanciers 10 et 11, qui peut être réalisée avec une forme et/ou des matériaux procurant cette souplesse de chaque balancier en déformation autour de l'axe de rotation du moyeu, par une réalisation élastiquement déformable d'au moins une partie de chaque balancier 10 et 11.

Au niveau du mât 7, de la souplesse requise peut être obtenue en délimitant, sur l'extrémité du mât 7 qui supporte les bras d'entraînement 8a-8b et 9a-9b, deux parties de mât souples en torsion relative autour de l'axe Z-Z du mât 7. Ces deux parties souples en torsion peuvent être délimitées par des rainures ou fentes sensiblement axiales, ménagées dans le mât 7, de sorte à délimiter sur ce dernier deux paires de zones diamétralement opposées et dont chaque paire de zone supporte l'une respectivement des deux paires d'embouts d'entraînement 8a, 8b et 9a, 9b. Ces zones peuvent également être séparées les unes des autres par des échancrures pratiquées dans le mât 7 et qui, comme les rainures et/ou fentes également pratiquées dans ce mât, peuvent ou non être débouchantes à l'extrémité du mât 7 du côté opposé à sa base, par laquelle il est entraîné en rotation.

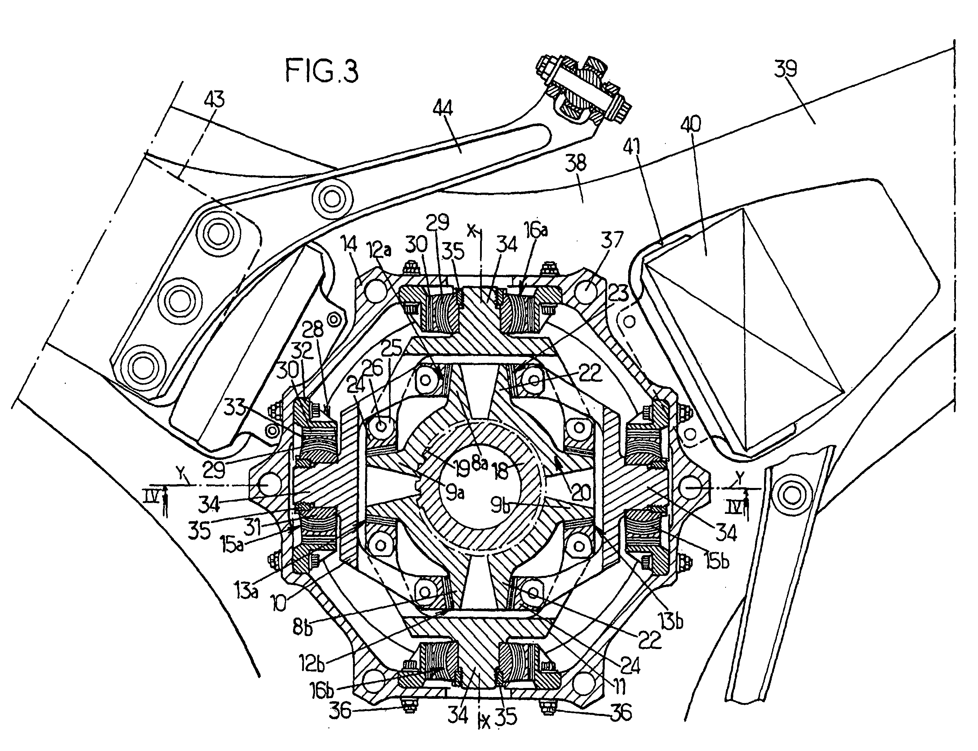

Un premier exemple de réalisation d'un rotor tripale, dont le moyeu est relié au mât rotor par un tel mécanisme d'entraînement homocinétique et de basculement d'ensemble du moyeu autour de tout axe de battement passant par l'axe du mât, est à présent décrit en référence aux figures 3 à 5.

Sur le rotor tripale des figures 3 à 5, le mât 7 est un mât tubulaire, dont l'extrémité cylindro-conique, reliée au moyeu, comporte une partie cylindrique cannelée 18 dont les cannelures 19 axiales externes sont en prise avec des cannelures axiales internes d'une bobine d'entraînement 20 montée sur la partie cannelée 18 du mât 7 de sorte à être solidaire en rotation du mât 7 autour de l'axe Z-Z, et retenue en position axiale sur le mât 7 par un écrou de fixation 21, vissé sur l'extrémité supérieure filetée de la partie de mât 18. Quatre moignons 22 de bras tubulaires et extérieurement tronconiques, en saillie radialement vers l'extérieur de la bobine 20 et coaxiaux et de révolution deux à deux autour de l'un respectivement de deux axes diamétraux perpendiculaires, constituent les deux embouts d'entraînement 8a et 8b d'un premier bras d'entraînement diamétral et les deux embouts d'entraînement 9a et 9b du second bras d'entraînement diamétral qui sont liés en rotation au mât 7 par la bobine 20. Ces quatre moignons de bras tronconiques 22 constituent simultanément les armatures radiales internes des quatre paliers lamifiés 23, dans cet exemple tronconiques et convergents vers l'extérieur, qui constituent les deux premiers paliers 12a, 12b et les deux seconds paliers 13a, 13b de pivotement des deux balanciers 10 et 11 autour de leur axe diamétral respectif X-X, Y-Y. Les paliers lamifiés 23 ont tous les quatre sensiblement la même rigidité radiale. Chacun d'eux comporte une armature radiale externe 24 qui est annulaire avec, comme représenté sur la figure 5, deux oreilles 25 en saillie radiale vers l'extérieur et par lesquelles le palier lamifié 23 est boulonné par les vis 26 sur le balancier 10 ou 11 correspondant, qui présente deux échancrures hémi-cylindriques 27 formant berceaux logeant chacun une partie de forme correspondante de l'armature radiale externe 24 de l'un respectivement des deux paliers 23 montés sur ce balancier 10 ou 11

A noter que le montage des armatures externes 24 des paliers 23 est inversé, en direction verticale sur les figures 3 à 5, sur l'un des balanciers 10 et 11 par rapport à l'autre, car les deux balanciers 10 et 11 sont axialement décalés selon l'axe Z-Z, le balancier 10 étant disposé au-dessus du balancier 11, la structure de ces balanciers 10 et 11 ainsi que le montage des paliers lamifiés 23 et des liaisons rotulées à présent décrites étant tel que les axes des paliers et des liaisons rotulées restent concourants en un même point sur l'axe Z-Z.

Les premières et secondes liaisons rotulées lamifiées 15a, 15b et 16a, 16b qui articulent les balanciers 10 et 11 sur le carter de moyeu 14 sont identiques les unes aux autres et réalisées chacune sous la forme d'une articulation combinée 28 à rotule lamifiée 29 associée à un palier lamifié cylindrique 30, de sorte que l'articulation combinée 28 présente une souplesse radiale et axiale par rapport à l'axe diamétral X-X ou Y-Y correspondant. Pour chaque articulation combinée 28, la rotule lamifiée 29 et le palier lamifié cylindrique 30 sont disposés radialement en série ou l'un autour de l'autre, entre une armature radiale interne 31 et une armature radiale externe 32, dont l'une est fixée au balancier 10 ou 11 correspondant et l'autre est fixée au carter de moyeu 14.

Dans l'exemple des figures 3 à 5, pour chaque articulation combinée 28, la rotule lamifiée 29 est à l'intérieur du palier lamifié cylindrique 30 correspondant, avec interposition d'une armature radiale intermédiaire 33, et l'armature radiale interne 31, qui est celle de la rotule lamifiée 29, est retenue autour de l'un respectivement de deux doigts d'entraînement 34, diamétralement opposés et en saillie radiale vers l'extérieur sur le balancier 10 ou11 correspondant, à l'aide d'un écrou 35 vissé autour de l'extrémité radiale externe filetée de ce doigt d'entraînement cylindrique 34. L'armature externe 32, qui, dans cet exemple, est l'armature externe du palier lamifié cylindrique 30, est fixée par deux boulons 36 contre la paroi interne du carter de moyeu 14, qui, dans cet exemple, présente une forme annulaire de section sensiblement octogonale (voir figure 3) d'épaisseur renforcée aux sommets percés d'alésages axiaux pour le passage de vis 37 de fixation du carter de moyeu 14 sur un plateau de moyeu 38.

Le mécanisme d'entraînement homocinétique et de basculement du moyeu 14-38 par rapport au mât 7 est ainsi logé et protégé à l'intérieur du carter de moyeu 14, tandis que le plateau de moyeu 38, ainsi suspendu et articulé au mât 7, et entraîné en rotation par ce dernier, peut être relié aux pales du rotor tripale de cet exemple.

Le plateau de moyeu 38 est, par exemple, un plateau réalisé en matériau composite et en forme d'étoile comportant autant de bras 39 élancés que le rotor comporte de pales, en l'occurrence trois dans cet exemple, pour que chaque pale soit retenue et articulée en pas sur le bras 39 correspondant par des moyens appropriés, partiellement et schématiquement repérés en 40 sur la figure 3. Ces moyens 40 sont montés, d'une part, à l'extrémité radiale externe (non représentée) de chaque bras 39, et, d'autre part, dans une alvéole 41, ménagée dans la partie du bras 39 adjacente à la partie centrale du plateau de moyeu 38, laquelle partie centrale présente une ouverture centrale 42, pour le passage du mât rotor 7.

De manière connue, la liaison entre les moyens de retenue et d'articulation 40 dans l'alvéole 41 et les moyens de retenue et d'articulation complémentaires 40 à l'extrémité externe du bras 39 est assurée par une manchette 43 rigide en torsion, solidaire du pied de la pale, et réalisée, par exemple, par deux plaques à l'aplomb l'une au-dessus de l'autre et orientées radialement de sorte à chevaucher le bras 39 de moyeu correspondant. L'extrémité radiale interne de cette manchette 43 est solidaire d'un levier de pas 44 permettant de commander le pas de la pale correspondante.

A noter qu'un tel plateau de moyeu 38 à bras élancés 39 présente à la fois une grande rigidité en traînée et une souplesse appropriée en battements, tout en permettant une disposition favorable du levier de pas 44, dont la chape d'extrémité, pour la liaison à une bielle de commande de pas, est à l'extérieur du plateau de moyeu 38, entre deux bras 39, et tel qu'un couplage pas-battement d'une faible valeur négative peut être obtenu, ce qui est particulièrement favorable pour les rotors basculants d'aéronefs convertibles, pour lesquels un faible moment de battement est également souhaité, ce qui est effectivement obtenu avec le rotor précédemment décrit, dont l'excentricité de battement est nulle, du fait que les axes de battement des pales coupent l'axe du mât rotor grâce au basculement d'ensemble du rotor par son moyeu autour d'un point de cet axe.

En variante, comme représenté sur la figure 12, afin de bénéficier d'une plus grande rigidité en battement cyclique, le moyeu 14-38 est également relié au mât 7 par au moins une demi-butée sphérique lamifiée centrale 45, qui constitue un moyen de rappel élastique du moyeu 14-38 en position neutre ou de repos par rapport à l'axe Z-Z du mât 7, c'est-à-dire sensiblement perpendiculaire à cet axe Z-Z. Comme représenté sur la figure 12, cette demi-butée sphérique lamifiée 45, disposée en-dessous du plateau de moyeu 38, est reliée au mât 7 par une armature rigide interne 46, boulonnée en 47 sur une bride radiale externe 48 du mât 7, tandis que l'armature rigide externe 49 de la demi-butée lamifiée sphérique 45 est prolongée vers le plateau de moyeu 38 par une coupole 50 munie de pattes par lesquelles cette coupole 50 est fixée contre la face inférieure du plateau de moyeu 38 par les vis 37 qui fixent sur ce dernier le carter de moyeu 14.

Sensiblement symétriquement par rapport au plateau de moyeu 38 et sensiblement au-dessus et autour du carter de moyeu 14, une autre demi-butée lamifiée sphérique (non représentée sur la figure 12) peut être fixée au moyeu par son armature externe et au mât 7 par son armature interne, en étant centrée, comme la demi-butée lamifiée sphérique inférieure 45, sur l'intersection des axes diamétraux X-X et Y-Y et de l'axe Z-Z, de sorte que ces deux demi-butées lamifiées sphériques contribuent à transmettre de plus au mât 7 la portance et les efforts coplanaires qui se développent dans le rotor.

En variante, la solidarisation en rotation du mât 7 et de l'armature interne 46 de la ou de chaque demi-butée lamifiée sphérique peut être assurée par des cannelures axiales, ou par tout autre moyen équivalent.

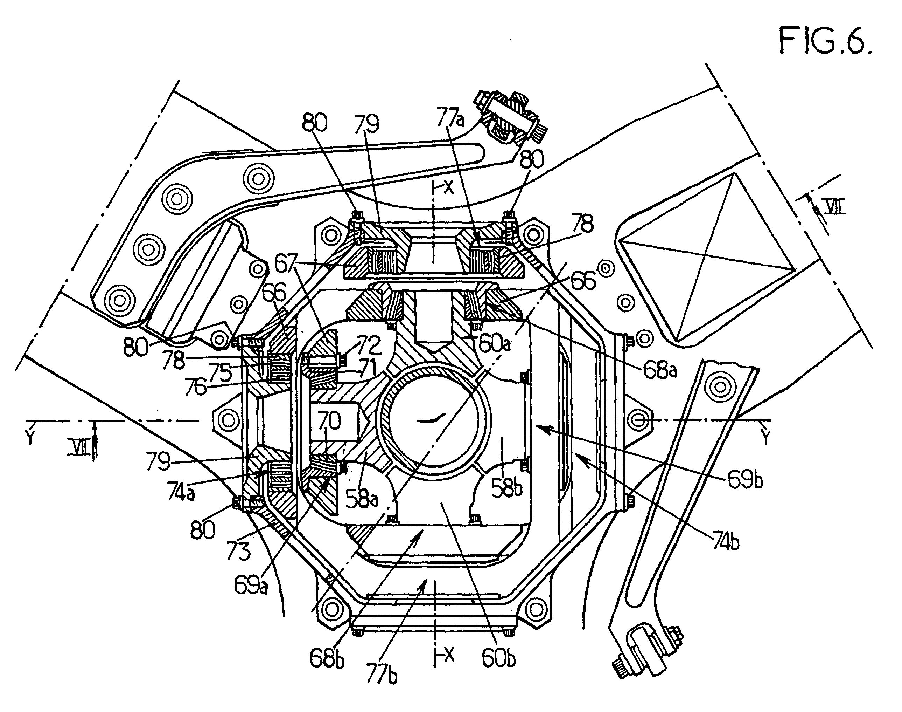

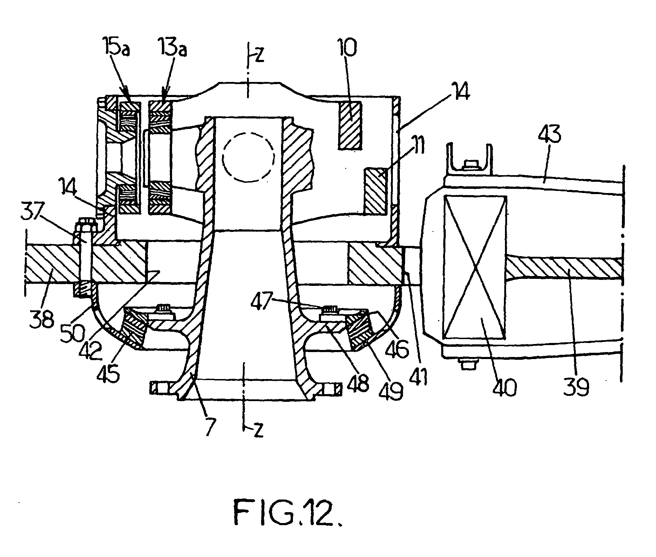

Le second exemple de rotor tripale à entraînement homocinétique des figures 6 à 11 se distingue essentiellement de celui des figures 3 à 5 par le fait que la souplesse apportée, dans l'exemple des figures 3 à 5, par la souplesse radiale et axiale des paliers lamifiés et rotules lamifiées, afin d'autoriser un faible débattement angulaire relatif des deux balanciers 10 et 11, est procurée par deux tubes de torsion coaxiaux et disposés l'un dans l'autre, solidaires en rotation par une base liée à un arbre d'entraînement, et tels que chacun respectivement des deux balanciers est monté pivotant autour de l'un respectivement des deux axes diamétraux X-X et Y-Y sur l'un respectivement des deux tubes de torsion.

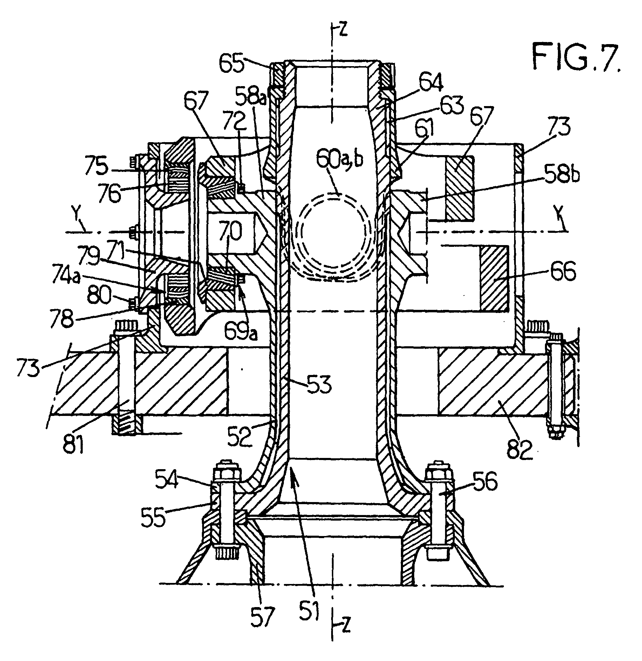

Sur les figures 6 et 7, le mât rotor 51, ou la partie de ce dernier qui entraîne le moyeu en rotation, comprend deux tubes de torsion 52 et 53, coaxiaux autour de l'axe Z-Z de rotation du mât 51 et disposés l'un 53 dans l'autre 52, ces deux tubes 52 et 53 comportant, à leur base, des brides radiales externes 54 et 55 par lesquelles les bases des tubes 52 et 53 sont solidarisées en rotation autour de l'axe Z-Z par une couronne de boulons 56 fixant simultanément les tubes 52 et 53 par leurs brides 54 et 55 à un arbre d'entraînement 57.

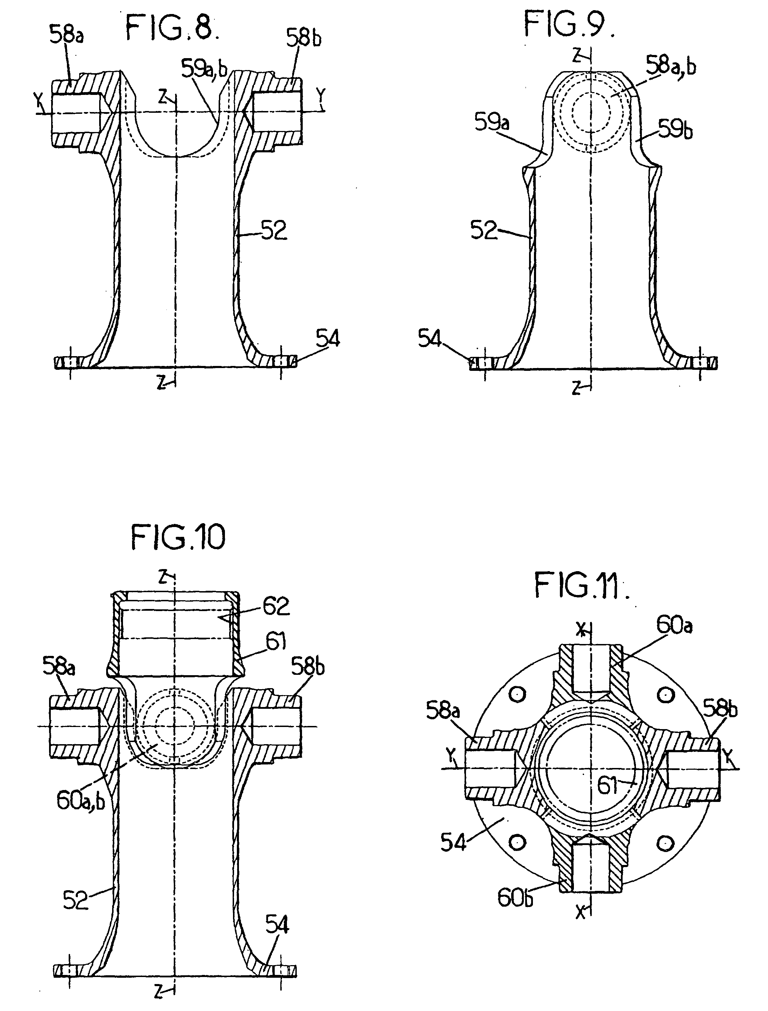

Le tube de torsion externe 52 est représenté sur les figures 8 et 9 en coupe axiale par deux plans perpendiculaires l'un à l'autre, et ce tube 52 supporte, à son extrémité axiale opposée à la bride 54, deux embouts d'entraînement 58a et 58b, cylindriques, évidés, coaxiaux et de révolution autour de l'un, par exemple Y-Y, des deux axes diamétraux perpendiculaires du mât 51, et diamétralement opposés en saillie radiale vers l'extérieur, et d'une seule pièce avec le tube 52, de sorte que les embouts 58a et 58b constituent un premier bras d'entraînement diamétral du mât 51. Le tube externe 52 présente également, entre ces embouts 58a et 58b, deux échancrures 59a et 59b, sensiblement en demi-cercle, pour le passage de deux autres embouts d'entraînement 60a et 60b, analogues aux embouts 58a et 58b en ce qu'ils sont cylindriques de section circulaire, diamétralement opposés coaxiaux, et de révolution autour d'un second axe diamétral, par exemple X-X, du mât 51. Ces deux embouts 60a et 60b constituent le second bras d'entraînement diamétral du dispositif, et sont diamétralement opposés en saillie radiale vers l'extérieur, et d'une seule pièce avec la base d'un manchon 61, comportant des cannelures axiales internes 62 qui viennent en prise avec des cannelures axiales externes 63 de la partie d'extrémité axiale 64 du tube interne 53, du côté opposé à sa base 55, et sur laquelle le manchon 61 est axialement engagé et fixé, en étant ainsi solidaire en rotation de cette partie 64 du tube interne 53 autour de l'axe Z-Z, par un écrou 65 vissé sur l'extrémité filetée de cette partie 64.

Comme dans l'exemple des figures 3 à 5, un premier balancier 66 est monté pivotant autour de l'axe diamétral X-X, défini par les embouts d'entraînement 60a et 60b du manchon 61 sur le tube de torsion interne 53, par deux paliers lamifiés tronconiques 68a et 68b, et de manière similaire, un second balancier 67 est monté pivotant autour de l'autre axe diamétral Y-Y, défini par les embouts d'entraînement 58a et 58b du tube de torsion externe 52, par deux autres paliers lamifiés tronconiques 69a et 69b.

Ces paliers lamifiés tronconiques 68a, 68b et 69a, 69b sont identiques les uns aux autres, de même rigidité radiale, et comporte chacun une armature annulaire interne 70, montée autour de l'embout 58a, 58b ou 60a, 60b correspondant, et leur armature annulaire externe 71 est engagée dans un alésage cylindrique coaxial correspondant du balancier 66 ou 67 correspondant, sur lequel cette armature externe 71 est fixée par des vis 72.

De plus, le balancier 66 est simultanément articulé sur un carter de moyeu 73, et à l'intérieur de ce dernier, par deux articulations 74a et 74b combinées à rotule lamifiée 75 et à palier lamifié cylindrique 76, au niveau de deux extrémités diamétralement opposées de ce balancier 66 par rapport à son axe diamétral X-X de pivotement défini sur le tube de torsion interne 53, et de manière similaire, l'autre balancier 67 est également articulé sur et à l'intérieur du carter de moyeu 73 par deux articulations combinées 77a et 77b identiques aux articulations 74a et 74b, c'est-à-dire à rotule lamifiée 75 et palier lamifié cylindrique 76. Comme dans l'exemple précédent, les rotules lamifiées 75 des deux articulations combinées de chaque balancier 66 ou 67 sont sensiblement centrées, au repos, sur l'axe diamétral de pivotement de l'autre balancier 67 ou 66, ou, lorsque l'un ou l'autre des balanciers 66 et 67 a basculé, ces rotules lamifiées 75 sont centrée sensiblement dans le plan diamétral passant par l'axe Z-Z du mât 51 et par l'axe diamétral de pivotement de l'autre balancier. Toutefois, lorsque l'un au moins des balanciers 66 et 67 est pivoté, le léger débattement angulaire relatif des deux balanciers 66 et 67 autour de leur axe commun d'entraînement est permis non seulement grâce à la souplesse axiale et radiale des paliers lamifiés tronconiques 68a, 68b et 69a, 69b, ainsi que des articulations combinées 74a, 74b et 77a, 77b, mais également grâce à la souplesse en torsion des deux tubes de torsion 52 et 53, qui sont réalisés de sorte à présenter sensiblement la même rigidité en torsion. Pour cette raison, les deux tubes de torsion 52 et 53 sont réalisés en des matériaux différents, présentant des modules d'élasticité différents, par exemple le tube externe 52 est en titane et le tube interne 53 en acier pour compenser le fait que l'inertie en torsion du tube externe 52 est supérieur à l'inertie en torsion du tube interne 53. Le module d'élasticité du tube externe 52 est donc plus faible pour que la souplesse en torsion de cet arbre externe 52 soit sensiblement égale à celle du tube interne 53. Ainsi, la souplesse nécessaire entre les deux chaînes de transmission du couple peut être apportée essentiellement par les tubes de torsion 52 et 53, sur chacun desquels s'articule à pivotement l'un respectivement des deux balanciers 66 et 67, ce qui simplifie la définition des paliers lamifiés 68a, 68b et 69a, 69b et liaisons rotulées lamifiées 74a, 74b et 77a, 77b.

Une différence par rapport à l'exemple précédent réside dans le montage des articulations combinées à rotule lamifiée 75 et palier lamifié cylindrique 76, dans la mesure où la rotule 75 entoure radialement le palier lamifié cylindrique 76, entre deux armatures annulaires dont l'une, 78, en position radiale externe, est engagée dans un alésage cylindrique coaxial du balancier 66 ou 67 correspondant, tandis que l'autre armature 79, en position radiale interne, se prolonge, axialement puis radialement vers l'extérieur, dans une lumière du carter de moyeu 73 sur lequel cette armature 79 est fixée par des vis 80.

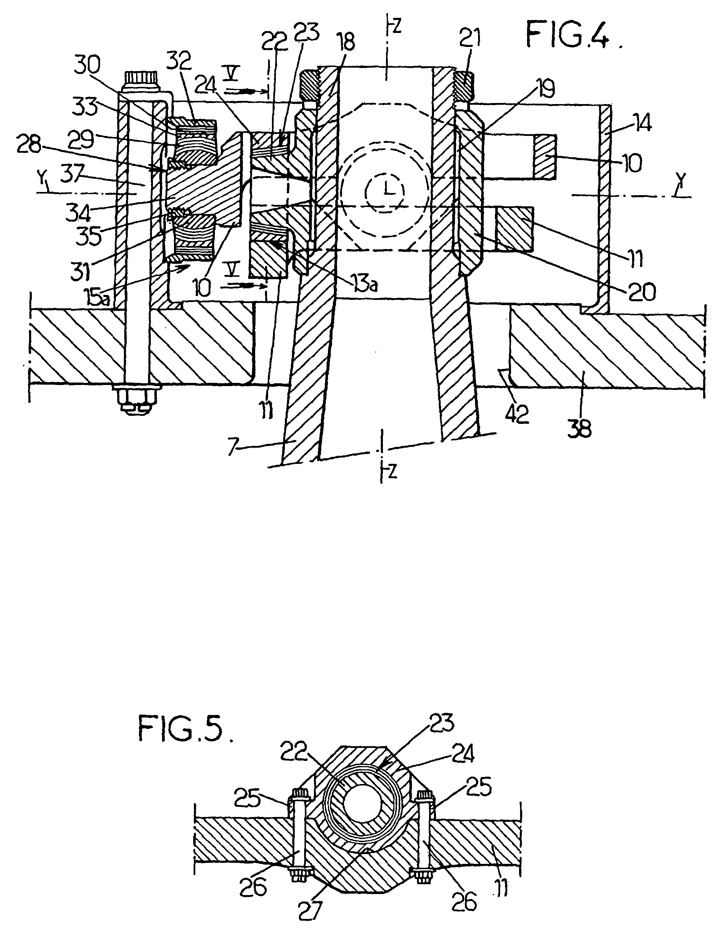

Par ailleurs, et comme dans l'exemple précédent, le carter de moyeu 73 est fixé par des vis 81 sur la face supérieure d'un plateau de moyeu 82, analogue au plateau de moyeu 38 des figures 3 et 4, c'est-à-dire de préférence en composite et de forme en étoile avec autant de bras élancés que le rotor comporte de pales, chaque pale étant retenue et articulée en pas sur le plateau de moyeu 82 au niveau de l'un de ses bras, et, enfin, le plateau de moyeu 82 peut également, comme représenté sur la figure 12, être de plus relié au mât 51, et en particulier à la base 54-55 de ce mât 51, par un organe de rappel élastique en position neutre du moyeu par rapport au mât, c'est-à-dire telle que le plateau de moyeu 82 soit sensiblement perpendiculaire à l'axe Z-Z du mât 51, par au moins une demi-butée sphérique lamifiée centrale, telle que la demi-butée 45 de la figure 12, et dont une armature interne est solidarisée en rotation au mât 51, tandis que son armature externe est solidarisée en rotation au plateau de moyeu 82.

Dans l'exemple des figures 6 à 11 également, le carter de moyeu 73 enveloppe et supporte un mécanisme à la fois d'entraînement homocinétique et de basculement d'ensemble du moyeu par rapport au mât rotor 51, sur lequel ce mécanisme est également supporté.

Par comparaison avec les réalisations de l'état de la technique, ce mécanisme de basculement d'ensemble et d'entraînement homocinétique remplace à la fois la butée centrale de battement et le dispositif d'entraînement homocinétique, par exemple du type à biellettes.

Dans le rotor selon l'invention, la disposition des différents composants de ce mécanisme rend la maintenance plus simple, car l'accessibilité à ces composants est grandement améliorée, et, en outre, bien que le nombre de paliers ou rotules lamifié(e)s reste identique à ceux des composants lamifiés des réalisations analogues de l'état de la technique, la définition des composants lamifiés du rotor selon l'invention est plus simple, ce qui se traduit par un gain de masse et de coût.

## Revendications

1. Rotor de giravion à entraînement homocinétique, en particulier pour un aéronef convertible à au moins un rotor basculant (4), comprenant :
- un mât (7, 51) rotor, apte à être entraîné en rotation autour de son axe longitudinal (Z-Z),
- un moyeu (14, 73), relié audit mât (7, 51) par un mécanisme d'entraînement homocinétique et par des moyens de basculement, permettant un pivotement d'ensemble du moyeu (14, 73) autour de tout axe de battement concourant avec l'axe (Z-Z) du mât et perpendiculaire audit axe (Z-Z) du mât, de sorte que ledit moyeu (14, 73) est apte à être entraîné en rotation homocinétique par ledit mât (7, 51), autour d'un axe géométrique de rotation du moyeu (14, 73) pouvant être incliné dans toute direction autour de l'axe (Z-Z) du mât (7, 51), et
- au moins deux pales (17), reliées chacune audit moyeu (14, 73) par des moyens (17a, 40) de retenue et d'articulation en pas de la pale (17) correspondante,
**caractérisé en ce que** lesdits moyens de basculement et mécanisme d'entraînement homocinétique comprennent :
- un premier balancier (10, 66), entraîné en rotation par ledit mât (7, 51) autour dudit axe (Z-Z) du mât, et monté pivotant autour d'un premier axe diamétral (X-X) du mât (7, 51), qui est sensiblement perpendiculaire audit axe (Z-Z) du mât, par deux premiers paliers (12a, 12b ; 68a, 68b) diamétralement opposés par rapport audit axe (Z-Z) du mât,
- un second balancier (11, 67), également entraîné en rotation par ledit mât (7, 51) autour dudit axe (Z-Z) du mât, et monté pivotant autour d'un second axe diamétral (Y-Y) dudit mât (7, 51), qui est sensiblement perpendiculaire audit axe (Z-Z) du mât et audit premier axe diamétral (X-X) et concourant avec ce dernier sensiblement sur ledit axe (Z-Z) du mât, par deux seconds paliers (13a, 13b ; 69a, 69b) diamétralement opposés par rapport audit axe (Z-Z) du mât (7, 51),
- ledit premier balancier (10, 66) étant de plus articulé sur ledit moyeu (14, 73) par deux premières liaisons rotulées (15a, 15b; 74a, 74b), diamétralement opposées par rapport audit axe (Z-Z) du mât (7, 51), et centrées chacune sensiblement dans un plan défini par ledit axe (Z-Z) du mât (7, 51) et ledit second axe diamétral (Y-Y),
- ledit second balancier (11, 67) étant de plus articulé sur ledit moyeu (14, 73) par deux secondes liaisons rotulées (16a, 16b; 77a, 77b), diamétralement opposées par rapport audit axe (Z-Z) du mât (7, 51) et centrées chacune sensiblement dans un plan défini par ledit axe (Z-Z) du mât (7, 51) et ledit premier axe diamétral (X-X), de sorte que l'entraînement en rotation des pales est assuré par deux chaînes de transmission de couple comprenant chacune ledit mât (7, 51), l'un respectivement des balanciers (10, 66 ; 11, 67), les deux liaisons rotulées (15a, 15b ; 74a, 74b-16a, 16b ; 77a, 77b) et les deux paliers (12a, 12b; 68a, 68b-13a, 13b; 69a, 69b) correspondants, et ledit moyeu (14, 73), lesdites chaînes de transmission de couple ayant sensiblement la même rigidité torsionnelle, et l'un au moins des composants de chaque chaîne de transmission de couple présentant une souplesse en déformation autour de l'axe de rotation du moyeu (14, 73).

2. Rotor selon la revendication 1, **caractérisé en ce que** ledit moyeu (14, 73) comprend au moins deux parties rendues souples en torsion relative autour de l'axe de rotation du moyeu (14, 73) par des caractéristiques de formes et/ou de matériaux constitutifs desdites parties de moyeu sur chacune desquelles l'un respectivement des deux balanciers (10, 66 ; 11, 67) est articulé par les deux liaisons rotulées correspondantes.

3. Rotor selon l'une quelconque des revendications 1 et 2, **caractérisé en ce que** chacun desdits balanciers (10, 11 ; 66, 67) est réalisé avec une forme et/ou en des matériaux procurant une souplesse dudit balancier en déformation autour de l'axe de rotation du moyeu (14, 73).

4. Rotor selon l'une quelconque des revendications 1 à 3, **caractérisé en ce que** ladite souplesse en déformation est présentée par ledit mât (7, 51), qui comporte au moins deux parties assouplies en torsion relative autour de l'axe (Z-Z) du mât (7, 51) et définies par au moins une fente et/ou au moins une rainure et/ou au moins une échancrure, sensiblement axiale, débouchante ou non, ménagée dans le mât (7, 51), et telles que chacun des balanciers (10, 11 ; 66, 67) est pivoté sur et entraîné en rotation par l'une respectivement desdites parties assouplies en torsion du mât (7, 51).

5. Rotor selon l'une quelconque des revendications 1 à 4, **caractérisé en ce que** ledit mât (51) comprend au moins deux tubes de torsion (52, 53), ayant des rigidités en torsion sensiblement égales et qui sont solidaires l'un de l'autre en rotation autour dudit axe (Z-Z) du mât (51) par une extrémité axiale (54, 55) apte à être entraînée en rotation, chacun des deux balanciers (66, 67) étant monté pivotant sur l'un respectivement des deux tubes de torsion (52, 53) autour de l'un respectivement des deux axes diamétraux (X-X, Y-Y).

6. Rotor selon la revendication 5, **caractérisé en ce que** les deux tubes de torsion (52, 53) sont coaxiaux, disposés l'un (53) dans l'autre (52), et solidaires en rotation autour de l'axe (Z-Z) du mât (51) par leurs extrémités (54, 55) axialement d'un même côté dudit axe (Z-Z) du mât, le tube interne (53) étant solidaire, du côté de son extrémité axiale opposée (64), d'un manchon coaxial (61) sur lequel le balancier (66) correspondant est monté pivotant (60a, 60b, 68a, 68b) autour de l'axe diamétral correspondant (Y-Y).

7. Rotor selon l'une quelconque des revendications 1 à 6, **caractérisé en ce que** les paliers de pivotement (23, 68a, 68b, 69a, 69b) des balanciers (10, 11 ; 66, 67) par rapport audit mât (7, 51) sont des paliers lamifiés cylindriques et/ou coniques, sensiblement coaxiaux autour respectivement des premier (X-X) et second (Y-Y) axes diamétraux, et de préférence sensiblement de même rigidité radiale.

8. Rotor selon l'une quelconque des revendications 1 à 7, **caractérisé en ce que** les paliers de pivotement (23, 68a, 68b, 69a, 69b) des balanciers (10, 11 ; 66, 67) par rapport audit mât (7, 51) comprennent des éléments lamifiés sphériques centrés sensiblement sur l'un respectivement des axes diamétraux X-X, Y-Y, et de préférence sensiblement de même rigidité radiale par rapport auxdits axes diamétraux.

9. Rotor selon l'une quelconque des revendications 1 à 8, **caractérisé en ce que** les liaisons rotulées (15a, 15b, 16a, 16b) des articulations des balanciers (10, 11) sur le moyeu (14) comprennent des rotules associées à des paliers lamifiés cylindriques (30), et/ou coniques sensiblement coaxiaux, procurant une souplesse radiale et axiale par rapport à l'axe diamétral correspondant (X-X, Y-Y), entre deux armatures rigides respectivement en position radiale interne (31) et externe (32), dont une première (31) est fixée au balancier (10, 11) correspondant, et dont la seconde (32) est fixée au moyeu (14).

10. Rotor selon l'une quelconque des revendications 1 à 9, **caractérisé en ce que** les liaisons rotulées (15a, 15b; 16a, 16b) des articulations des balanciers (10, 11) sur le moyeu (14) comprennent des rotules lamifiées.

11. Rotor selon l'une quelconque des revendications 1 à 10, **caractérisé en ce que** lesdits premier et second balanciers (10, 11 ; 66, 67) sont entraînés en rotation autour dudit axe (Z-Z) du mât (7, 51) par respectivement un premier (8a, 8b; 58a, 58b) et un second (9a-9b; 60a-60b) bras d'entraînement, solidaires en rotation dudit mât (7, 51), et dont les axes sont respectivement les premier et second axes diamétraux (X-X, Y-Y) dudit mât.

12. Rotor selon la revendication 11, **caractérisé en ce que** chacun des bras d'entraînement comprend deux embouts (8a, 8b ; 9a, 9b) de révolution autour de l'axe diamétral (X-X, Y-Y) correspondant, diamétralement opposés et en saillie radiale vers l'extérieur dudit mât (7), et chacun retenu dans l'un respectivement des deux paliers (12a, 12b; 13a, 13b) de pivotement du balancier (10, 11) correspondant par rapport audit mât (7).

13. Rotor selon la revendication 12 telle que rattachée à l'une des revendications 7 à 10, **caractérisé en ce que** les deux embouts (8a, 8b ; 9a, 9b) de chaque bras d'entraînement sont en saillie radiale vers l'extérieur et solidaires d'une bobine (20) centrale d'entraînement montée autour du mât (7) et solidaire en rotation de ce dernier autour de son axe (Z-Z).

14. Rotor selon la revendication 12 telle que rattachée à l'une des revendications 5 et 6, **caractérisé en ce que** les deux embouts (58a, 58b ; 60a, 60b) de chaque bras d'entraînement sont en saillie radiale vers l'extérieur et solidaire de l'un respectivement des deux tubes de torsion (52, 53).

15. Rotor selon la revendication 9, **caractérisé en ce que** ladite seconde armature (32) de chaque articulation (28) combinée à rotule (29) et palier (30) lamifié est fixée sur un carter (14) de moyeu, qui entoure les deux balanciers (10, 11), et leurs paliers de pivotement (12a, 12b ; 13a, 13b) et articulations (15a, 15b ; 16a, 16b), et est fixé à un plateau de moyeu (38) relié aux pales (17) et présentant une ouverture centrale (42) de passage dudit mât (7).

16. Rotor selon la revendication 15, **caractérisé en ce que** ledit plateau de moyeu (38) est un plateau en forme d'étoile à bras (39) élancés en nombre égal au nombre des pales (17) et sur chacun desquels sont montés les moyens (40) de retenue et d'articulation en pas d'une pale (17).

17. Rotor selon la revendication 7, **caractérisé en ce que** chaque palier lamifié (12a, 12b; 13a, 13b) de pivotement d'un balancier (10, 11) est un palier conique (23) convergent radialement vers l'extérieur, dont une armature radiale externe (24) est annulaire et fixée (26) dans une échancrure (27) de forme correspondante du balancier (10, 11) correspondant, et dont une armature radiale interne (22) est tubulaire et solidaire d'un embout d'entraînement (8a, 8b ; 9a, 9b) par ledit mât (7).

18. Rotor selon l'une quelconque des revendications 1 à 17, **caractérisé en ce que** le moyeu (14-38) est également relié au mât (7) par au moins un moyen (45) de rappel élastique du moyeu (14-38) dans une position de repos sensiblement perpendiculaire audit axe (Z-Z) du mât (7).

19. Rotor selon la revendication 18, **caractérisé en ce que** ledit moyen de rappel élastique comprend au moins une demi-butée sphérique lamifiée centrale (45), dont une armature externe (49) est liée au moyeu (14-38) et une armature interne (46) est solidaire en rotation du mât (7).

20. Aéronef convertible, comprenant au moins un rotor basculant, destiné à basculer entre une configuration avion, dans laquelle ledit rotor se comporte comme une hélice, et une configuration hélicoptère, dans laquelle ledit rotor se comporte comme un rotor sustentateur d'hélicoptère, **caractérisé en ce que** ledit rotor est un rotor à entraînement homocinétique selon l'une quelconque des revendications 1 à 19.

## Claims

1. A rotor for a rotor craft with homokinetic drive, in particular for a convertible aircraft having at least one tilting rotor (4), comprising:
- a rotor mast (7, 51) suitable for being driven in rotation about its longitudinal axis (Z-Z),
- a hub (14, 73) connected to the said mast (7, 51 ) by a homokinetic drive mechanism and tilting means, enabling the hub (14, 73) to pivot as a whole about any flapping axis intersecting with the axis (Z-Z) of the mast and perpendicular to the said axis (Z-Z) of the mast, such that the said hub (14, 73) is suitable for being driven in homokinetic rotation by the said mast (7, 51 ) about a geometrical axis of rotation of the hub (39 - 62) which may be inclined in any direction about the axis (Z-Z) of the mast (7, 51), and
- at least two blades (17), each connected to the said hub (14, 73) by means (17a, 40) for holding and articulating the corresponding blade (17) in its pitch,
**characterised in that** the said tilting means and homokinetic drive mechanism comprise:
- a first rocker (10, 66) which is driven in rotation by the said mast (7, 51) about the said axis (Z-Z) of the mast and mounted to pivot about a first diametric axis (X-X) of the mast (7, 51), this axis being substantially perpendicular with respect to the said axis (Z-Z) of the mast, through two first bearings (12a, 12b; 68a, 68b) diametrically opposed with respect to the said axis (Z-Z) of the mast,
- a second rocker (11, 67) which is also driven in rotation through the said mast (7, 51) about the said axis (Z-Z) of the mast and mounted to pivot about a second diametric axis (Y-Y) of the said mast (7, 51 ), this axis being substantially perpendicular with respect to the said axis (Z-Z) of the mast and to the said first diametric axis (X-X), and intersecting with the latter substantially on the said axis (Z-Z) of the mast by means of two second bearings (13a, 13b; 69a, 69b) diametrically opposed with respect to the said axis (Z-Z) of the mast (7, 51),
- the said first rocker (10, 66) moreover being articulated on the said hub (14, 73) by means of two first ball joints (15a, 15b; 74a, 74b) which are diametrically opposed with respect to the said axis (Z-Z) of the mast (7, 51), and are each substantially centred in a plane defined by the said axis (Z-Z) of the mast (7, 51 ) and the said second diametric axis (Y-Y),
- the said second rocker (11, 67) moreover being articulated on the said hub (14, 73) by means of two second ball joints (16a, 16b; 77a, 77b) which are diametrically opposed with respect to the said axis (Z-Z) of the mast (7, 51), and are each substantially centred in a plane defined by the said axis (Z-Z) of the mast (7, 51) and the said first diametric axis (X-X) such that the blades are driven in rotation by two torque transmission chains each comprising the said mast (7, 51), a respective one of the rockers (10, 66; 11, 67), the two ball joints (15a, 15b; 74a, 74b - 16a, 16b; 77a, 77b) and the two corresponding bearings (12a, 12b; 68a, 68b - 13a, 13b; 69a, 69b) and the said hub (14, 73), the said torque transmission chains having substantially the same torsional rigidity, and at least one of the components of each torque transmission chain having a flexibility for deformation about the axis of rotation of the hub (14, 73).

2. A rotor according to Claim 1, **characterised in that** the said hub (14, 73) comprises at least two parts which are made flexible for relative torsion about the axis of rotation of the hub (14, 73) by characteristics of shape and/or materials making up the said parts of the hub, on each of which a respective one of the two rockers (10, 66; 11, 67) is articulated by means of the two corresponding ball joints.

3. A rotor according to either of Claims 1 or 2, **characterised in that** each of the said rockers (10, 11; 66, 67) is made to have a shape and/or made from materials imparting a flexibility to the said rocker for deformation about the axis of rotation of the hub (14, 73).

4. A rotor according to any one of Claims 1 to 3, **characterised in that** the said flexibility for deformation is provided by the said mast (7, 51), which has at least two parts made flexible for relative torsion about the axis (Z-Z) of the mast (7, 51) and defined by at least one slot and/or at least one groove and/or at least one scalloped recess which is substantially axial and may or may not open out and is made in the mast (7, 51), and such that each of the rockers (10, 11; 66, 67) is pivoted on and driven in rotation by a respective one of the said parts made flexible for torsion of the mast (7, 51).

5. A rotor according to any one of Claims 1 to 4, **characterised in that** the said mast (51) comprises at least two torsion tubes (52, 53) which have substantially the same torsional rigidity and which rotate in fixed relation to one another about the said axis (Z-Z) of the mast (51) by one axial end (54, 55) suitable for being driven in rotation, each of the two rockers (66, 67) being mounted to pivot on a respective one of the two torsion tubes (52, 53) about a respective one of the two diametric axes (X-X, Y-Y).

6. A rotor according to Claim 5, **characterised in that** the two torsion tubes (52, 53) are coaxial, disposed one (53) inside the other (52), and rotate in fixed relation about the axis (Z-Z) of the mast (51) by their ends (54, 55) axially on the same side of the said axis (Z-Z) of the mast, the inside tube (53) being integrally formed, on the side of its opposite axial end (64), with a coaxial casing (61) on which the corresponding rocker (66) is mounted to pivot (60a, 60b, 68a, 68b) about the corresponding diametric axis (Y-Y).

7. A rotor according to any one of Claims 1 to 6, **characterised in that** the bearings (23, 68a, 68b, 69a, 69b) for pivoting the rockers (10, 11; 66, 67) with respect to the said mast (7, 51) are cylindrical and/or conical layered bearings which are substantially coaxial about first (X-X) and second (Y-Y) diametric axes respectively, and preferably have substantially the same radial rigidity.

8. A rotor according to any one of Claims 1 to 7, **characterised in that** the bearings (23, 68a, 68b, 69a, 69b) for pivoting the rockers (10, 11; 66, 67) with respect to the said mast (7, 51) comprise spherical layered elements which are centred substantially on a respective one of the diametric axes X-X, Y-Y, and preferably have substantially the same radial rigidity with respect to the said diametric axes.

9. A rotor according to any one of Claims 1 to 8, **characterised in that** the ball joints (15a, 15b, 16a, 16b) of the articulations of the rockers (10, 11) on the hub (14) comprise balls associated with cylindrical layered bearings (30) and/or conical layered bearings which are substantially coaxial and provide a radial and axial flexibility with respect to the corresponding diametric axis (X-X, Y-Y) between two rigid reinforcements parts which are respectively in the inner radial position (31) and the outer radial position (32), whereof a first (31) is fixed to the corresponding rocker (10,11) and the second (32) is fixed to the hub (14).

10. A rotor according to any one of Claims 1 to 9, **characterised in that** the ball joints (15a, 15b; 16a, 16b) of the articulations of the rockers (10, 11) on the hub (14) comprise layered balls.

11. A rotor according to any one of Claims 1 to 10, **characterised in that** the said first and second rockers (10, 11; 66, 67) are driven in rotation about the said axis (Z-Z) of the mast (7, 51) by, respectively, a first driving arm (8a, 8b; 58a, 58b) and a second driving arm (9a-9b; 60a-60b) which rotate in fixed relation to the said mast (7, 51) and whereof the axes are respectively the first and second diametric axes (X-X, Y-Y) of the said mast.

12. A rotor according to Claim 11, **characterised in that** each of the driving arms comprises two end pieces (8a, 8b; 9a, 9b) for revolution about the corresponding diametric axis (X-X, Y-Y), diametrically opposed and projecting radially outwards of the said mast (7), and each retained in a respective one of the two bearings (12a, 12b; 13a, 13b) for pivoting the corresponding rocker (10, 11) with respect to the said mast (7).

13. A rotor according to Claim 12 in combination with one of Claims 7 to 10, **characterised in that** the two end pieces (8a, 8b; 9a, 9b) of each driving arm project radially outwards of and are integrally formed with a central driving bobbin (20) mounted around the mast (7) and rotating in fixed relation thereto about its axis (Z-Z).

14. A rotor according to Claim 12 in combination with one of Claims 5 or 6, **characterised in that** the two end pieces (58a, 58b; 60a, 60b) of each driving arm project radially outwards of and are integrally formed with a respective one of the two torsion tubes (52, 53).

15. A rotor according to Claim 9, **characterised in that** the said second reinforcement part (32) of each articulation (28) comprising a combination of ball (29) and layered bearing (30) is fixed to a hub framework (14) which surrounds the two rockers (10, 11) and their pivot bearings (12, 12b; 13a, 13b) and articulations (15a, 15b; 16a, 16b) and is fixed to a hub plate (38) coupled to the blades (17) and having a central opening (42) for the said mast (7) to pass through.

16. A rotor according to Claim 15, **characterised in that** the said hub plate (38) is a plate in the form of a star with thin arms (39) which are equal in number to the number of blades (17), and on each of which means (40) of holding and articulating a blade (17) in its pitch are mounted.

17. A rotor according to Claim 7, **characterised in that** each layered bearing (12, 12b; 13a, 13b) for pivoting a rocker (10, 11) is a conical bearing (23) converging radially outwards, whereof an outer radial reinforcement part (24) is annular and is fixed (26) in a scalloped recess (27) which corresponds in shape to the corresponding rocker (10, 11), and whereof an inner radial reinforcement part (22) is tubular and is integrally formed with a driving end piece (8a, 8b; 9a, 9b) by the said mast (7).

18. A rotor according to any one of Claims 1 to 17, **characterised in that** the hub (14 - 38) is also coupled to the mast (7) by at least one means (45) of resiliently returning the hub (14 - 38) to a rest position which is substantially perpendicular to the said axis (Z-Z) of the mast (7).

19. A rotor according to Claim 18, **characterised in that** the said means of resilient return comprises at least one central layered spherical half-stop (45) whereof an outer reinforcement part (49) is coupled to the hub (14 - 38) and an inner reinforcement part (46) rotates in fixed relation to the mast (7).

20. A convertible aircraft, comprising at least one tilting rotor, intended to switch between an aeroplane configuration in which the said rotor acts in the manner of a propeller and a helicopter configuration in which the said rotor acts in the manner of a rotor supporting a helicopter, **characterised in that** the said rotor is a rotor with homokinetic drive according to any one of Claims 1 to 19.

## Patentansprüche

1. Homokinetisch angetriebener Rotor eines Drehflügelflugzeugs, insbesondere für ein Verwandlungsflugzeug mit mindestens einem Kipprotor (4), der aufweist:
- einen Rotormast (7, 51), der um seine Längsachse (Z-Z) in Drehung versetzt werden kann,
- eine Nabe (14, 73), die mit dem Mast (7, 51) über einen homokinetischen Antriebsmechanismus und über Kippmittel verbunden ist, die ein einheitliches Schwenken der Nabe (14, 73) um jede Schlagachse ermöglicht, die die Achse (Z-Z) des Masts kreuzt und senkrecht zur Achse (Z-Z) des Masts verläuft, so dass die Nabe (14, 73) vom Mast (7, 51) in eine homokinetische Drehung um eine geometrische Drehachse der Nabe ( 14, 73) versetzt werden kann, die in jeder Richtung um die Achse (Z-Z) des Masts (7, 51) geneigt werden kann, und
- mindestens zwei Blätter (17), die je mit der Nabe (14, 73) über Halte- und Blattverstellungs-Gelenkmittel (17a, 40) des entsprechenden Blatts (17) verbunden sind,
**dadurch gekennzeichnet, dass** die Kippmittel und der homokinetische Antriebsmechanismus aufweisen:
- eine erste Schwinge (10, 66), die vom Mast (7, 51) um die Achse (Z-Z) des Masts in Drehung versetzt wird und über zwei erste Lager (12a, 12b; 68a, 68b), die einander bezüglich der Achse (Z-Z) des Masts diametral gegenüberliegen, um eine erste diametrale Achse (X-X) des Masts (7, 51) schwenkbar montiert ist, die im wesentlichen senkrecht zur Achse (Z-Z) des Masts liegt,
- eine zweite Schwinge (11, 67), die auch vom Mast (7, 51) um die Achse (Z-Z) des Masts in Drehung versetzt wird und über zwei zweite Lager (13a, 13b; 69a, 69b), die einander bezüglich der Achse (Z-Z) des Masts diametral gegenüberliegen, um eine zweite diametrale Achse (Y-Y) des Masts (7, 51) schwenkbar montiert ist, die im wesentlichen senkrecht zur Achse (Z-Z) des Masts (7, 51) und zur ersten diametralen Achse (X-X) des Masts liegt und diese letztere im wesentlichen auf der Achse (Z-Z) des Masts kreuzt,
- wobei die erste Schwinge (10, 66) außerdem an der Nabe (14, 73) über zwei erste Kugelgelenkverbindungen (15a, 15b; 74a, 74b) angelenkt ist, die einander bezüglich der Achse (Z-Z) des Masts (7, 51) diametral gegenüberliegen und je im wesentlichen in einer von der Achse (Z-Z) des Masts und der zweiten diametralen Achse (Y-Y) definierten Ebene zentriert sind,
- wobei die zweite Schwinge (11, 67) außerdem an der Nabe (14, 73) über zwei zweite Kugelgelenkverbindungen (16a, 16b; 77a, 77b) angelenkt ist, die einander bezüglich der Achse (Z-Z) des Masts (7, 51) diametral gegenüberliegen und je im wesentlichen in einer von der Achse (Z-Z) des Masts (7, 51) und der ersten diametralen Achse (X-X) definierten Ebene zentriert sind, so dass der Drehantrieb der Blätter von zwei Drehmoment-Übertragungsketten gewährleistet wird, die je den Mast (7, 51), eine der Schwingen (10, 66; 11, 67), die beiden Kugelgelenkverbindungen (15a, 15b; 74a, 74b-16a, 16b; 77a, 77b) und die beiden entsprechenden Lager (12a, 12b; 68a, 68b-13a, 13b; 69a, 69b), und die Nabe (14, 73) enthalten, wobei die Drehmoment-Übertragungsketten im wesentlichen die gleiche Verdrehsteifigkeit aufweisen und mindestens einer der Bestandteile jeder Drehmoment-Übertragungskette eine Verformungsgeschmeidigkeit um die Drehachse der Nabe (14, 73) aufweist.

2. Rotor nach Anspruch 1, **dadurch gekennzeichnet, dass** die Nabe (14, 73) mindestens zwei Bereiche aufweist, die durch Formeigenschaften und/oder Eigenschaften des diese Nabenbereiche bildenden Materials in relativer Verdrehung um die Drehachse der Nabe (14, 73) geschmeidig gemacht wurden, wobei an jedem der beiden Bereiche eine der beiden Schwingen (10, 66; 11, 67) über die beiden entsprechenden Kugelgelenkverbindungen angelenkt ist.

3. Rotor nach einem der Ansprüche 1 und 2, **dadurch gekennzeichnet, dass** jede der Schwingen (10, 11; 66, 67) mit einer Form und/oder aus Materialien hergestellt wird, die eine Verformungsgeschmeidigkeit der Schwinge um die Drehachse der Nabe (14, 73) liefern.

4. Rotor nach einem der Ansprüche 1 bis 3, **dadurch gekennzeichnet, dass** die Verformungsgeschmeidigkeit vom Mast (7, 51) geliefert wird, der mindestens zwei Bereiche aufweist, die in relativer Verdrehung um die Achse (Z-Z) des Masts (7, 51) geschmeidig gemacht wurden und von mindestens einem Schlitz und/oder mindestens einer Nut und/oder mindestens einem im wesentlichen axialen, mündenden oder nicht mündenden Ausschnitt definiert werden, der im Mast (7, 51) ausgebildet ist, und derart sind, dass jede der Schwingen (10, 11; 66, 67) auf einem der verdrehungsgeschmeidigen Bereiche des Masts (7, 51) geschwenkt und von ihm in Drehung versetzt wird.

5. Rotor nach einem der Ansprüche 1 bis 4, **dadurch gekennzeichnet, dass** der Mast (51) mindestens zwei Verdrehungsrohre (52, 53) aufweist, die im wesentlichen gleiche Verdrehungssteifigkeiten aufweisen und über ein axiales Ende (54-55), das in Drehung versetzt werden kann, in Drehung um die Achse (Z-Z) des Masts (51) fest miteinander verbunden sind, wobei jede der beiden Schwingen (66, 67) auf einem der beiden Verdrehungsrohre (52, 53) um eine der diametralen Achsen (X-X, Z-Z) schwenkbar montiert ist.

6. Rotor nach Anspruch 5, **dadurch gekennzeichnet, dass** die beiden Verdrehungsrohre (52, 53) koaxial, eines (53) im anderen (52) angeordnet, und über ihre axial auf der gleichen Seite der Achse (Z-Z) des Masts liegenden Enden (54, 55) in Drehung um die Achse (Z-Z) des Masts (51) fest miteinander verbunden sind, wobei das innere Rohr (53) auf der Seite seines axial gegenüberliegenden Endes (64) fest mit einer koaxialen Muffe (61) verbunden ist, auf der die entsprechende Schwinge (66) schwenkbar (60a, 60b, 68a, 68b) um die entsprechende diametrale Achse (Y-Y) montiert ist.

7. Rotor nach einem der Ansprüche 1 bis 6, **dadurch gekennzeichnet, dass** die Schwenklager (23, 68a, 68b, 69a, 69b) der Schwingen (10, 11; 66, 67) in Bezug auf den Mast (7, 51) zylindrische und/oder konische kunststoffbeschichtete Lager sind, die im wesentlichen koaxial um erste (X-X) bzw. zweite diametrale Achsen (Y-Y) und vorzugsweise im wesentlichen von gleicher radialer Steifheit sind.

8. Rotor nach einem der Ansprüche 1 bis 7, **dadurch gekennzeichnet, dass** die Schwenklager (23, 68a, 68b, 69a, 69b) der Schwingen (10, 11; 66, 67) in Bezug auf den Mast (7, 51) kugelförmige kunststoffbeschichtete Elemente aufweisen, die im wesentlichen auf eine der diametralen Achsen X-X bzw. Y-Y zentriert sind und vorzugsweise im wesentlichen die gleiche radiale Steifheit bezüglich der diametralen Achsen aufweisen.

9. Rotor nach einem der Ansprüche 1 bis 8, **dadurch gekennzeichnet, dass** die Kugelgelenkverbindungen (15a, 15b, 16a, 16b) der Gelenkverbindungen der Schwingen (10, 11) auf der Nabe (14) Kugelgelenke aufweisen, die zylindrischen und/oder konischen, im wesentlichen koaxialen kunststoffbeschichteten Lagern (30) zugeordnet sind, die zwischen zwei steifen Bewehrungen in der radial inneren (31) bzw. äußeren Stellung (32), von denen eine erste (31) an der entsprechenden Schwinge (10, 11) und die zweite (32) an der Nabe (14) befestigt ist, eine radiale und axiale Geschmeidigkeit bezüglich der entsprechenden diametralen Achse (X-X, Y-Y) verleihen.

10. Rotor nach einem der Ansprüche 1 bis 9, **dadurch gekennzeichnet, dass** die Kugelgelenkverbindungen (15a, 15b; 16a, 16b) der Gelenkverbindungen der Schwingen (10, 11) auf der Nabe (14) kunststoffbeschichtete Kugelgelenke aufweisen.

11. Rotor nach einem der Ansprüche 1 bis 10, **dadurch gekennzeichnet, dass** die erste und die zweite Schwinge (10, 11; 66, 67) von einem ersten (8a, 8b; 58a, 58b) bzw. einem zweiten Antriebsarm (9a-9b; 60a-60b) in Drehung um die Achse (Z-Z) des Masts (7, 51) versetzt werden, die in Drehung fest mit dem Mast (7, 51) verbunden sind und deren Achsen die erste bzw. die zweite diametrale Achse (X-X, Y-Y) des Masts sind.

12. Rotor nach Anspruch 11, **dadurch gekennzeichnet, dass** jeder der Antriebsarme zwei Ansatzstücke (8a, 8b; 9a, 9b) aufweist, die um die entsprechende Achse (X-X, Y-Y) drehsymmetrisch sind, einander diametral gegenüberliegen und radial zur Außenseite des Masts (7) vorstehen, und je in einem der beiden Schwenklager (12a, 12b; 13a, 13b) der entsprechenden Schwinge (10, 11) bezüglich des Masts (7) gehalten werden.

13. Rotor nach Anspruch 12 in Abhängigkeit von einem der Ansprüche 7 bis 10, **dadurch gekennzeichnet, dass** die beiden Ansatzstücke (8a, 8b; 9a, 9b) jedes Antriebsarms radial nach außen vorstehen und fest mit einer zentralen Antriebsspule (20) verbunden sind, die um den Mast (7) herum montiert und mit diesem in Drehung um seine Achse (Z-Z) fest verbunden ist.

14. Rotor nach Anspruch 12 in Abhängigkeit von einem der Ansprüche 5 und 6, **dadurch gekennzeichnet, dass** die beiden Ansatzstücke (58a, 58b; 60a, 60b) jedes Antriebsarms radial nach außen vorstehen und fest mit einem der beiden Verdrehungsrohre (52 bzw. 53) verbunden sind.

15. Rotor nach Anspruch 9, **dadurch gekennzeichnet, dass** die zweite Bewehrung (32) jedes Gelenks (28) in Kombination mit dem Kugelgelenk (29) und dem kunststoffbeschichteten Lager (30) an einem Nabengehäuse (14) befestigt ist, das die beiden Schwingen (10, 11) und ihre Schwenklager (12a, 12b; 13a, 13b) und Gelenke (15a, 15b; 16a, 16b) umgibt und an einer Nabenplatte (38) befestigt ist, die mit den Blättern (11) verbunden ist und eine zentrale Durchlassöffnung (42) für den Mast (7) aufweist.

16. Rotor nach Anspruch 15, **dadurch gekennzeichnet, dass** die Nabenplatte (38) eine sternförmige Platte mit vorstehenden Armen (39) in einer Anzahl gleich der Anzahl von Blättern (17) ist, auf jedem von denen die Halte- und Blattverstellungs-Gelenkmittel (40) eines Blatts (17) montiert sind.

17. Rotor nach Anspruch 7, **dadurch gekennzeichnet, dass** jedes kunststoffbeschichtete Schwenklager (12a, 12b; 13a, 13b) einer Schwinge (10, 11) ein konisches Lager (23) ist, das radial nach außen konvergiert, von dem eine radial äußere Bewehrung (24) ringförmig und in einem Ausschnitt (27) entsprechender Form der entsprechenden Schwinge (10, 11) befestigt ist (26), und von dem eine radial innere Bewehrung (22) rohrförmig und fest mit einem Ansatzstück (8a, 8b; 9a, 9b) für den Antrieb durch den Mast (7) verbunden ist.

18. Rotor nach einem der Ansprüche 1 bis 17, **dadurch gekennzeichnet, dass** die Nabe (14-38) auch mit dem Mast (7) über mindestens ein Mittel (45) zum elastischen Rückstellen der Nabe (14-38) in eine Ruhestellung im wesentlichen senkrecht zur Achse (Z-Z) des Masts (7) verbunden ist.

19. Rotor nach Anspruch 18, **dadurch gekennzeichnet, dass** das elastische Rückstellmittel mindestens einen kunststoffbeschichteten kugelförmigen zentralen Halbanschlag (45) aufweist, von dem eine äußere Bewehrung (49) mit der Nabe (14-38) verbunden ist und von dem eine innere Bewehrung (46) in Drehung fest mit dem Mast (7) verbunden ist.

20. Verwandlungsflugzeug, das mindestens einen Kipprotor aufweist, der dazu bestimmt ist, zwischen einer Flugzeugkonfiguration, in der der Rotor sich wie ein Propeller verhält, und einer Hubschrauberkonfiguration, in der der Rotor sich wie ein Hubrotor eines Hubschraubers verhält, zu kippen, **dadurch gekennzeichnet, dass** der Rotor ein Rotor mit homokinetischem Antrieb gemäß einem der Ansprüche 1 bis 19 ist.
